# EUROPEAN PATENT APPLICATION

(11) **EP 4 686 284 A1**
(43) Date of publication of application: **28.01.2026**
(21) Application number: 23928092.8
(22) Date of filing: 23.03.2023
(51) Int. Cl.: H04W 72/044

(54) **BEAM COMBINATION DETERMINATION METHOD AND APPARATUS, DEVICE, AND STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Dehns Germany Partnerschaft mbB
(86) International application number: PCT/CN2023/083524
(87) International publication number: WO 2024/192780

(57) **Abstract**

The present disclosure relates to a beam combination determination method and apparatus, a device, and a storage medium. The method comprises: determining first information, wherein the first information is used for indicating a first quantity of beam combinations, and the beam combinations are combinations of one or more numbers-of-beams; and determining the first quantity of beam combinations on the basis of the first information. The first quantity of beam combinations is determined on the basis of the first information. A maintainable beam combination of a terminal can be dynamically configured, so that the dynamic maintenance of the beam combination is realized in a multi-TRP scenario, thereby improving the performance of multi-TRP-based transmission, and reducing the downlink configuration.

## Description

### TECHNICAL FIELD

The present disclosure relates to the field of communication technologies, and in particular to a beam combination determination method, apparatus, device, and storage medium.

### BACKGROUND

Related technologies discuss how network devices can provide services to terminals based on multiple transmission and reception points (TRP). In some implementations, network devices can configure channel measurement resources (CMR), which can include multiple channel state information reference signal (CSI-RS) resources. CSI-RS resources can correspond to TRPs.

### SUMMARY

The embodiments of the present disclosure provide a beam combination determination method, apparatus, device, and storage medium.

According to a first aspect of an embodiment of the present disclosure, a beam combination determination method is provided, which is executed by a terminal, and the method includes: determining first information, where the first information is used to indicate a first number of beam combinations, where the beam combination is a combination of one or more numbers-of-beams; and determining the first number of beam combinations based on the first information.

According to a second aspect of an embodiment of the present disclosure, a beam combination determination method is provided, which is executed by a network device, and the method includes: determining first information, where the first information is used to indicate a first number of beam combinations, where the beam combination is a combination of one or more numbers-of-beams.

According to a third aspect of an embodiment of the present disclosure, a first beam combination determination apparatus is provided, the apparatus including: a processing module, configured to determine first information, the first information being used to indicate a first number of beam combinations, where the beam combination is a combination of one or more numbers-of-beams; and the processing module is further configured to determine the first number of beam combinations based on the first information.

According to a fourth aspect of an embodiment of the present disclosure, a second beam combination determination apparatus is provided, the apparatus including: a processing module, configured to determine first information, the first information being used to indicate a first number of beam combinations, where the beam combination is a combination of one or more numbers-of-beams.

According to a fifth aspect of an embodiment of the present disclosure, a communication device is provided, including: one or more processors; where the processor is configured to call instructions to enable the communication device to execute any one of the beam combination determination methods in the first aspect and the second aspect.

According to the sixth aspect of an embodiment of the present disclosure, a communication system is provided, including a terminal and a network device, where the terminal is configured to implement any one of the beam combination determination methods in the first aspect, and the network device is configured to implement any one of the beam combination determination methods in the second aspect.

According to a seventh aspect of an embodiment of the present disclosure, a storage medium is provided, which stores instructions. When the instructions are executed on a communication device, the communication device can execute any one of the beam combination determination methods in the first aspect and the second aspect.

It is to be understood that the foregoing general description and the following detailed description are exemplary and explanatory only and are not restrictive of the disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
FIG. 1 is a schematic diagram showing a communication system architecture according to an embodiment of the present disclosure.
FIG. 2a is an interactive schematic diagram illustrating a beam combination determination method according to an embodiment of the present disclosure.
FIG. 2b is an interactive schematic diagram illustrating another beam combination determination method according to an embodiment of the present disclosure.
FIG. 2c is an interactive schematic diagram of yet another beam combination determination method according to an embodiment of the present disclosure.
FIG. 3a is a flowchart of a beam combination determination method according to an exemplary embodiment.
FIG. 3b is a flowchart of another beam combination determination method according to an exemplary embodiment.
FIG. 3c is a flowchart of yet another beam combination determination method according to an exemplary embodiment.
FIG. 3d is a flowchart of still another beam combination determination method according to an exemplary embodiment.
FIG. 4a is a flowchart of another beam combination determination method according to an exemplary embodiment.
FIG. 4b is a flowchart of yet another beam combination determination method according to an exemplary embodiment.
FIG. 4c is a flowchart of still another beam combination determination method according to an exemplary embodiment.
FIG. 4d is a flowchart of another beam combination determination method according to an exemplary embodiment.
FIG. 5 is a flowchart of yet another beam combination determination method according to an exemplary embodiment.
FIG. 6 is a schematic diagram of an apparatus for determining beam combination according to an exemplary embodiment.
FIG. 7 is a schematic diagram of another apparatus for determining beam combination according to an exemplary embodiment.
FIG. 8 is a schematic diagram showing a communication device according to an exemplary embodiment.
FIG. 9 is a schematic diagram showing a chip structure according to an exemplary embodiment.

### DETAILED DESCRIPTION

Exemplary embodiments are described in detail herein, with examples illustrated in the accompanying drawings. When the following description refers to the drawings, identical numerals in different drawings represent identical or similar elements unless otherwise indicated. The embodiments described in the following exemplary embodiments are not intended to represent all embodiments consistent with the present disclosure.

Network devices need to select beam combinations for different CSI-RS resource configurations. When the number of beam combinations configured by a network device exceeds a certain limit, how the terminal maintains the beam combinations configured by the network device is still unresolved.

Embodiments of the present disclosure provide a beam combination determination method, apparatus, device, and storage medium.

According to a first aspect of an embodiment of the present disclosure, a beam combination determination method is provided, which is executed by a terminal, and the method includes: determining first information, where the first information is used to indicate a first number of beam combinations, where the beam combination is a combination of one or more numbers-of-beams; and determining the first number of beam combinations based on the first information.

In the above embodiment, the first number of beam combinations is determined by the first information. The beam combinations that can be maintained by the terminal can be dynamically configured to achieve dynamic maintenance of the beam combination in a multi-TRP scenario, thereby improving the transmission performance based on multi-TRP and reducing downlink configuration.

With reference to some embodiments of the first aspect, in some embodiments, determining the first information includes: receiving a radio resource control (RRC) signaling, where the RRC signaling includes the first information.

In the above embodiment, the first number of beam combinations can be directly configured based on the RRC signaling. The terminal can also dynamically configure the maintainable beam combinations to achieve dynamic maintenance of the beam combinations in multi-TRP scenarios, thereby improving multi-TRP transmission performance and reducing downlink configuration. Furthermore, by reusing existing signaling, no new signaling is required, thereby saving communication resources.

In combination with some embodiments of the first aspect, in some embodiments, determining the first information includes: receiving second information, where the second information is used to indicate a second number of beam combinations; receiving third information, where the third information is used to indicate a first number of beam combinations in the second number of beam combinations; and determining the first information based on the second information and the third information.

In the above embodiment, the first number of beam combinations can be configured based on multiple information, and with the third information, the first number of beam combinations to be maintained can be indicated directly from the number of beam combinations that can be maintained by the terminal configured by the second information. The beam combinations that can be maintained by the terminal can be dynamically configured to achieve dynamic maintenance of the beam combination in a multi-TRP scenario, thereby improving the transmission performance based on multi-TRP and reducing downlink configuration.

In conjunction with some embodiments of the first aspect, in some embodiments, the second information is an RRC signaling, and the third information is a media access control control unit (MAC CE).

In the above embodiment, a first number of beam combinations can be configured based on the RRC signaling and the MAC CE, the number of beam combinations that can be maintained by the terminal can be configured through the RRC signaling, and the first number of beam combinations to be maintained can be further determined based on the MAC CE. The beam combinations that can be maintained by the terminal can be dynamically configured to achieve dynamic maintenance of beam combinations in multi-TRP scenarios, thereby improving transmission performance based on multi-TRP and reducing downlink configuration. In addition, by reusing existing signaling, no new signaling is required, thereby saving communication resources.

In combination with some embodiments of the first aspect, in some embodiments, the third information includes a first field, the second number of beam combinations includes the first number of beam combinations corresponding respectively to multiple codepoints in the first field of the third information, and the first field in the third information is used to indicate one codepoint among the multiple codepoints.

In the above embodiment, the first number of beam combinations to be maintained can be indicated based on the codepoint of the third information and the relationship between each codepoint and the first number of beam combinations in the second information. The beam combinations that can be maintained by the terminal can be dynamically configured to achieve dynamic maintenance of the beam combination in a multi-TRP scenario, thereby improving the transmission performance based on multi-TRP and reducing downlink configuration.

With reference to some embodiments of the first aspect, in some embodiments, the second information is an RRC signaling, and the third information is downlink control information (DCI).

In the above embodiment, the first number of beam combinations can be configured based on the RRC signaling and the DCI, the relationship between different codepoints and the first number of beam combinations can be configured through the RRC signaling, and the first number of beam combinations to be maintained can be further determined based on the codepoints in the DCI. The beam combinations that can be maintained by the terminal can be dynamically configured to achieve dynamic maintenance of the beam combination in a multi-TRP scenario, thereby improving the transmission performance based on multi-TRP and reducing downlink configuration. In addition, by reusing existing signaling, there is no need to add new signaling, thereby saving communication resources.

In combination with some embodiments of the first aspect, in some embodiments, determining the first information includes: receiving second information, where the second information is used to indicate a second number of beam combinations; receiving fourth information, where the fourth information is used to indicate a third number of beam combinations in the second number of beam combinations; receiving fifth information, where the first field in the fifth information is used to indicate one codepoint among multiple codepoints; determining the first information based on the second information, the fourth information and the fifth information; where the third number of beam combinations includes the first number of beam combinations corresponding respectively to multiple codepoints in the first field.

In the above embodiment, the first number of beam combinations can be configured based on multiple information, and with the fourth information, the third number of beam combinations can be indicated directly from the number of beam combinations that can be maintained by the terminal configured by the second information. Also, based on the codepoints of the fifth information and the relationship between each codepoint in the third number of beam combinations and the first number of beam combinations indicated by the third information, the first number of beam combinations to be maintained is indicated. The beam combinations that can be maintained by the terminal can be dynamically configured to achieve dynamic maintenance of the beam combination in a multi-TRP scenario, thereby improving the transmission performance based on multi-TRP and reducing downlink configuration.

In combination with some embodiments of the first aspect, in some embodiments, the second information is an RRC signaling, the fourth information is a MAC CE, and the fifth information is DCI.

In the above embodiment, the first number of beam combinations can be configured based on the RRC signaling, the MAC CE and the DCI, the relationship between different codepoints and the first number of beam combinations can be configured through RRC signaling, and the third number of beam combinations can be indicated based on the MAC CE. The first number of beam combinations to be maintained is further determined based on the codepoints in the DCI. The beam combinations that can be maintained by the terminal can be dynamically configured to achieve dynamic maintenance of the beam combination in the scenario of multi-TRP, thereby improving the transmission performance based on multi-TRP and reducing downlink configuration. In addition, by reusing existing signaling, there is no need to add new signaling, thereby saving communication resources.

In combination with some embodiments of the first aspect, in some embodiments, the number of beams in the beam combination is respectively associated with a CSI-RS resource, for different numbers of CSI-RS resources, the maximum value of the first number is the same or different.

In the above embodiment, for different numbers of CSI-RS resources in the CMR, the maximum number of beam combinations that can be maintained by the terminal can be the same or different, thereby achieving flexible configuration of the beam combinations maintained by the terminal.

In combination with some embodiments of the first aspect, in some embodiments, the number of CSI-RS is 1, and the maximum value of the first number is 2 or 4.

In the above embodiment, when the CSI-RS is 1, the maximum value of the first number can be 2 or 4, which can achieve flexible configuration of the beam combination maintained by the terminal.

In combination with some embodiments of the first aspect, in some embodiments, the number of CSI-RSs is greater than 1, and the maximum value of the first number is 4.

In the above embodiment, when the CSI-RS is greater than 1, the maximum value of the first number may be 4, which ensures the diversity of beam combinations maintained by the terminal and allows multiple beams to be associated with the CSI-RS.

In combination with some embodiments of the first aspect, in some embodiments, the method further includes: sending sixth information, where the sixth information is used to indicate one or more beam combinations among the first number of beam combinations.

In the above embodiment, the terminal can feedback information to inform the network device the beam combination maintained by the terminal. In the scenario of multi-TRP, dynamic maintenance of the beam combination is realized, thereby improving the transmission performance based on multi-TRP and reducing downlink configuration.

In combination with some embodiments of the first aspect, in some embodiments, the number of bits corresponding to a beam combination indicated by the sixth information is determined based on the first number or the maximum value of the first number.

In the above embodiment, the number of bits indicating the beam combination in the sixth information fed back by the terminal can be determined based on the first number or the maximum value of the first number, thereby realizing flexible configuration of the sixth information, so that the bit overhead of the sixth information can be reduced in some cases.

In combination with some embodiments of the first aspect, in some embodiments, the CSI-RS resource is greater than 1, and multiple numbers-of-beams in the beam combination is associated with the multiple CSI-RS resources in sequence based on a preset order.

In the above embodiment, the relationship between the CSI-RS resources and the numbers-of-beams in the beam combination can be indicated based on a preset order, thereby configuring the numbers-of-beams in the beam combination and improving communication transmission performance.

In combination with some embodiments of the first aspect, in some embodiments, the method further includes: sending seventh information, where the seventh information is used to indicate a maximum value of the first number supported by the terminal.

In the above embodiment, the terminal can feedback the maximum value of the first number supported by the terminal, so that the network device can dynamically configure the beam combination that the terminal can maintain based on the feedback, so as to realize dynamic maintenance of the beam combination in the scenario of multi-TRP, thereby improving the transmission performance based on multi-TRP and reducing downlink configuration.

In combination with some embodiments of the first aspect, in some embodiments, the maximum value of the first number supported by the terminal includes: one maximum value of the first number supported by the terminal.

In the above embodiment, the terminal can configure a unified maximum value of the first number, so as to realize the configuration of a unified maximum value of the first number supported by the terminal for different numbers of CSI-RS resources. This allows the network device to dynamically configure the beam combination that the terminal can maintain based on the feedback, so as to realize dynamic maintenance of the beam combination in the scenario of multi-TRP, thereby improving the transmission performance based on multi-TRP and reducing downlink configuration.

In combination with some embodiments of the first aspect, in some embodiments, the maximum value of the first number supported by the terminal includes: multiple maximum values of the first number supported by the terminal.

In the above embodiment, the terminal can configure different maximum values of the first number respectively, so as to flexibly configure the maximum value of the first number supported by the terminal for different numbers of CSI-RS resources. This allows the network device to dynamically configure the beam combination that the terminal can maintain based on the feedback, so as to achieve dynamic maintenance of the beam combination in the scenario of multi-TRP, thereby improving the transmission performance based on multi-TRP and reducing downlink configuration.

According to a second aspect of an embodiment of the present disclosure, a beam combination determination method is provided, which is executed by a network device. The method includes: determining first information, where the first information is used to indicate a first number of beam combinations, where the beam combination is a combination of one or more numbers-of-beams.

In the above embodiment, by determining the first number of beam combinations, the beam combinations that can be maintained by the terminal can be dynamically configured to achieve dynamic maintenance of the beam combination in a multi-TRP scenario, thereby improving the transmission performance based on multi-TRP and reducing downlink configuration.

In combination with some embodiments of the second aspect, in some embodiments, the method further includes: sending an RRC signaling, where the RRC signaling includes the first information.

In the above embodiment, the first number of beam combinations can be directly configured based on the RRC signaling. The terminal can also dynamically configure the maintainable beam combinations to achieve dynamic maintenance of the beam combinations in multi-TRP scenarios, thereby improving multi-TRP transmission performance and reducing downlink configuration. Furthermore, by reusing existing signaling, no new signaling is required, thereby saving communication resources.

In combination with some embodiments of the second aspect, in some embodiments, the method further includes: sending second information, where the second information is used to indicate a second number of beam combinations; sending third information, where the third information is used to indicate a first number of beam combinations in the second number of beam combinations; wherein the first information is determined based on the second information and the third information.

In the above embodiment, the first number of beam combinations can be configured based on multiple information, and with the third information, the first number of beam combinations to be maintained can be indicated directly from the number of beam combinations that can be maintained by the terminal configured by the second information. The beam combinations that can be maintained by the terminal can be dynamically configured to achieve dynamic maintenance of the beam combination in a multi-TRP scenario, thereby improving the transmission performance based on multi-TRP and reducing downlink configuration.

In conjunction with some embodiments of the second aspect, in some embodiments, the second information is an RRC signaling, and the third information is a MAC CE.

In combination with some embodiments of the second aspect, in some embodiments, the third information includes a first field, the second number of beam combinations includes the first number of beam combinations corresponding respectively to multiple codepoints in the first field of the third information, and the first field in the third information is used to indicate one codepoint among the multiple codepoints.

With reference to some embodiments of the second aspect, in some embodiments, the second information is an RRC signaling, and the third information is DCI.

In combination with some embodiments of the second aspect, in some embodiments, the method further includes: sending second information, where the second information is used to indicate a second number of beam combinations; sending fourth information, where the fourth information is used to indicate a third number of beam combinations in the second number of beam combinations; and sending fifth information, where the first field in the fifth information is used to indicate one codepoint among multiple codepoints, where the third number of beam combinations includes the first number of beam combinations corresponding respectively to multiple codepoints in the first field, and where the first information is determined based on the second information, the fourth information and the fifth information.

In the above embodiment, the first number of beam combinations can be configured based on multiple information, and with the fourth information, the third number of beam combinations can be indicated directly from the number of beam combinations that can be maintained by the terminal configured by the second information. Also, based on the codepoints of the fifth information and the relationship between each codepoint in the third number of beam combinations and the first number of beam combinations indicated by the third information, the first number of beam combinations to be maintained is indicated. The beam combinations that can be maintained by the terminal can be dynamically configured to achieve dynamic maintenance of the beam combination in a multi-TRP scenario, thereby improving the transmission performance based on multi-TRP and reducing downlink configuration.

In combination with some embodiments of the second aspect, in some embodiments, the second information is an RRC signaling, the fourth information is a MAC CE, and the fifth information is DCI.

In combination with some embodiments of the second aspect, in some embodiments, the number of beams in the beam combination is respectively associated with a CSI-RS resource, for different numbers of CSI-RS resources, the maximum value of the first number is the same or different.

In combination with some embodiments of the second aspect, in some embodiments, the number of CSI-RS is 1, and the maximum value of the first number is 2 or 4.

In combination with some embodiments of the second aspect, in some embodiments, the number of CSI-RSs is greater than 1, and the maximum value of the first number is 4.

In combination with some embodiments of the second aspect, in some embodiments, the method further includes: receiving sixth information, where the sixth information is used to indicate one or more beam combinations among the first number of beam combinations.

In the above embodiment, the network device receives feedback information sent by the terminal to determine the beam combination maintained by the terminal. In the scenario of multi-TRP, dynamic maintenance of the beam combination is realized, thereby improving the transmission performance based on multi-TRP and reducing downlink configuration.

In combination with some embodiments of the second aspect, in some embodiments, the number of bits corresponding to a beam combination indicated by the sixth information is determined based on the first number or the maximum value of the first number.

In combination with some embodiments of the second aspect, in some embodiments, the CSI-RS resource is greater than 1, and multiple numbers-of-beams in the beam combination is associated with the multiple CSI-RS resources in sequence based on a preset order.

In combination with some embodiments of the second aspect, in some embodiments, the method further includes: receiving seventh information, where the seventh information is used to indicate a maximum value of the first number supported by the terminal.

In the above embodiment, the network device can receive the maximum value of the supported first number feedback by the terminal, so as to dynamically configure the beam combination that the terminal can maintain based on the feedback, so as to realize dynamic maintenance of the beam combination in the scenario of multi-TRP, thereby improving the transmission performance based on multi-TRP and reducing downlink configuration.

In combination with some embodiments of the first aspect, in some embodiments, the maximum value of the first number supported by the terminal includes: one maximum value of the first number supported by the terminal.

In combination with some embodiments of the first aspect, in some embodiments, the maximum value of the first number supported by the terminal includes: multiple maximum values of the first number supported by the terminal.

According to a third aspect of an embodiment of the present disclosure, a beam combination determination method is provided for a communication system, where the method includes: a network device determines first information, the first information being used to indicate a first number of beam combinations, where the beam combination is a combination of one or more numbers-of-beams; and a terminal determines the first information; and the terminal determines the first number of beam combinations based on the first information.

In the above embodiment, by determining the first number of beam combinations, the beam combinations that can be maintained by the terminal can be dynamically configured to achieve dynamic maintenance of the beam combination in a multi-TRP scenario, thereby improving the transmission performance based on multi-TRP and reducing downlink configuration.

According to a fourth aspect of an embodiment of the present disclosure, a first beam combination determination apparatus is provided, the apparatus including: a processing module, configured to determine first information, the first information being used to indicate a first number of beam combinations, where the beam combination is a combination of one or more numbers-of-beams; the processing module is further configured to determine the first number of beam combinations based on the first information, where the first number of beam combinations includes one or more beam combinations.

According to a fifth aspect of an embodiment of the present disclosure, a second beam combination determination apparatus is provided, the apparatus including: a processing module, configured to determine first information, the first information being used to indicate a first number of beam combinations, where the beam combination is a combination of one or more numbers-of-beams.

According to a sixth aspect of an embodiment of the present disclosure, a communication device is provided, comprising: one or more processors; where the processor is configured to call instructions to enable the communication device to execute any one of the beam combination determination methods in the first aspect and the second aspect.

According to the seventh aspect of an embodiment of the present disclosure, a communication system is provided, including a terminal and a network device, where the terminal is configured to implement any one of the beam combination determination methods in the first aspect, and the network device is configured to implement any one of the beam combination determination methods in the second aspect.

According to an eighth aspect of an embodiment of the present disclosure, a storage medium is provided, which stores instructions. When the instructions are executed on a communication device, the communication device can execute any one of the beam combination determination methods in the first aspect and the second aspect.

According to the ninth aspect of the embodiment of the present disclosure, the embodiment of the present disclosure provides a program product. When the above program product is executed by a communication device, causes the above communication device to execute the method described in the optional implementations of the first and third aspects, and the second and third aspects.

According to the tenth aspect of the embodiments of the present disclosure, the embodiments of the present disclosure provide a computer program, which, when running on a computer, enables the computer to execute the method described in the optional implementations of the first and third aspects, and the second and third aspects.

It is understood that the first beam combination determination apparatus, the second beam combination determination apparatus, the communication device, the communication system, the storage medium, the program product, and the computer program described above are all used to implement the methods provided in the embodiments of the present disclosure. Therefore, the beneficial effects achieved by these methods can be referenced to the beneficial effects of the corresponding methods and are not further elaborated here.

The present disclosure provides a "beam combining determination method, apparatus, device, and storage medium." In some embodiments, the terms "beam combining determination method", "information processing method", and "communication method" are interchangeable; the terms "beam combining determination apparatus", "information processing apparatus", and "communication apparatus" are interchangeable; and the terms "communication system" and "information processing system" are interchangeable.

The embodiments of the present disclosure are not exhaustive and are merely illustrative of some embodiments, and are not intended to be a specific limitation on the scope of protection of the present disclosure. In the absence of contradiction, each step in a certain embodiment can be implemented as an independent embodiment, and the steps can be arbitrarily combined. For example, a solution after removing some steps in a certain embodiment can also be implemented as an independent embodiment, and the order of the steps in a certain embodiment can be arbitrarily exchanged. In addition, the optional implementation methods in a certain embodiment can be arbitrarily combined; in addition, the embodiments can be arbitrarily combined. For example, some or all steps of different embodiments can be arbitrarily combined, and a certain embodiment can be arbitrarily combined with the optional implementation methods of other embodiments.

In the respective embodiments of the present disclosure, unless otherwise specified or provided for by logic, the terms and/or descriptions between the embodiments are consistent and can be referenced by each other. The technical features in different embodiments can be combined to form a new embodiment based on their inherent logical relationships.

The terms used in the embodiments of the present disclosure are only for the purpose of describing specific embodiments and are not intended to limit the present disclosure.

In the embodiments of the present disclosure, unless otherwise specified, elements expressed in the singular, such as "a", "an", "the", "above", "said", "foregoing", "this", etc., may mean "one and only one", or "one or more", "at least one", etc. For example, when articles such as "a", "an", or "the" in English are used in translation, the noun following the article may be understood as a singular expression or a plural expression.

In the embodiments of the present disclosure, "plurality" refers to two or more.

In some embodiments, the terms "at least one of", "at least one of", "at least one of", "one or more", "a plurality of", "multiple", etc. can be used interchangeably.

In the embodiments of the present disclosure, descriptions such as "at least one of A, B, C ...", "A and/or B and/or C ...", etc., include the case where any one of A, B, C ... exists alone, and also include any combination of any multiple of A, B, C ..., and each case can exist alone; for example, " at least one of A, B, C " includes the case of A alone, B alone, C alone, the combination of A and B, the combination of A and C, the combination of B and C, and the combination of A, B, and C; for example, A and/or B includes the case of A alone, B alone, and the combination of A and B.

In some embodiments, descriptions such as "in one case, A, in another case, B", or "in response to one case, A, in response to another case, B", can include the following technical solutions depending on the situation: executing A independently of B (in some embodiments, A); executing B independently of A (in some embodiments, B); selectively executing A and B (in some embodiments, selecting between A and B); and executing both A and B (in some embodiments, A and B). The above description also applies when there are multiple branches, such as A, B, and C.

The prefixes "first" and "second" in the embodiments of the present disclosure are only used to distinguish different description objects and do not constitute any restriction on the position, order, priority, quantity or content of the description objects. For the statement of the description object, please refer to the description in the context of the claims or embodiments, and no unnecessary restriction should be constituted due to the use of prefixes. For example, if the description object is a "field", the ordinal number before the "field" in the "first field" and the "second field" does not limit the position or order between the "fields". "First" and "second" do not limit whether the "fields" they modify are in the same message, nor do they limit the order of the "first field" and the "second field". For another example, if the description object is a "level", the ordinal number before the "level" in the "first level" and the "second level" does not limit the priority between the "levels". For another example, the number of description objects is not limited by the ordinal number and can be one or more. Taking "first device" as an example, the number of "devices" can be one or more. In addition, the objects modified by different prefixes can be the same or different. For example, if the description object is "device", then the "first device "and the "second device" can be the same device or different devices, and their types can be the same or different; for another example, if the description object is "information", then the "first information" and the "second information" can be the same information or different information, and their contents can be the same or different.

In some embodiments, "including A", "comprising A", "for indicating A", and "carrying A" can be interpreted as directly carrying A or indirectly indicating A.

In some embodiments, terms such as "in response to ...", "in response to determining ...", "in the case of ...", "at the time of ...", "when ...", "if ...", "provided ...", etc. can be used interchangeably.

In some embodiments, terms such as "greater than", "greater than or equal to", "not smaller than", "more than", "more than or equal to", "not less than", "higher than", "higher than or equal to", "not lower than", and "above" can be replaced with each other, and terms such as "smaller than", "smaller than or equal to", "not greater than", "less than", "less than or equal to", "not more than", "lower than", "lower than or equal to", "not higher than", and "below" can be replaced with each other.

In some embodiments, devices and the like can be interpreted as physical or virtual, and their names are not limited to the names described in the embodiments. Terms such as "apparatus", "equipment", "device", "circuit", "network element", "node", "function", "unit", "section", "system", "network", "chip", "chip system", "entity", and "subject" can be used interchangeably.

In some embodiments, the terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "carrier", "component carrier" and "bandwidth part (BWP)" can be used interchangeably.

In some embodiments, the terms such as "terminal", "terminal device", "user equipment (UE)", "user terminal", "mobile station (MS)", "mobile terminal (MT)", subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client may be used interchangeably.

In some embodiments, access network devices, core network devices, or network devices can be replaced with terminals. For example, structures in which the communication between an access network device, core network device, or network device and a terminal is replaced with communication between multiple terminals, which can also be referred to device-to-device (D2D) or vehicle-to-everything (V2X), can also be applied to the present disclosure. In this case, the terminal can also have all or part of the functionality of the access network device. Furthermore, terms such as "uplink" and "downlink" can be replaced with terms corresponding to inter-terminal communication (e.g., "sidelink"). For example, uplink channels and downlink channels can be replaced with sidelink channels, and uplink and downlink can be replaced with sidelinks.

In some embodiments, the terminal may be replaced by an access network device, a core network device, or a network device. In this case, the access network device, the core network device, or the network device may have a structure that has all or part of the functions of the terminal.

In some embodiments, the names of information, etc. are not limited to the names described in the embodiments, and terms such as "information", "message", "signal", "signaling", "report", "configuration", "indication", "instruction", "command", "channel", "parameter", "domain", "field", "symbol", "symbol", "code element", "codebook", "codeword", "codepoint", "bit", "data", "program", and "chip" can be used interchangeably.

In some embodiments, terms such as "uplink", "up link", and "physical uplink" can be used interchangeably, terms such as "downlink", "down link", and "physical downlink" can be used interchangeably, and terms such as "side", "sidelink", "side communication", "sidelink communication", "direct connection", "direct link", "direct communication", and "direct link communication" can be used interchangeably.

In some embodiments, the terms "downlink control information (DCI)", "downlink (DL) assignment", "DL DCI", "uplink (UL) grant", "UL DCI", etc. may be used interchangeably.

In some embodiments, the terms "physical downlink shared channel (PDSCH)" and "DL data" may be used interchangeably, and the terms "physical uplink shared channel (PUSCH) "and "UL data" may be used interchangeably.

In some embodiments, the terms "radio", "wireless", "radio access network (RAN)", "access network (AN)", "RAN-based" and the like may be used interchangeably.

In some embodiments, the terms "search space", "search space set", "search space configuration", "search space set configuration", "control resource set (CORESET)", and "CORESET configuration" may be used interchangeably.

In some embodiments, the terms "synchronization signal (SS)", "synchronization signal block (SSB)", "reference signal (RS)", "pilot", and "pilot signal" may be used interchangeably.

In some embodiments, the terms "component carrier (CC)", "cell", "frequency carrier", "carrier frequency", etc. may be used interchangeably.

In some embodiments, the terms "resource block (RB)", "physical resource block (PRB)", "sub-carrier group (SCG)", "resource element group (REG)", "PRB pair", "RB pair", "resource element (RE)" and the like may be used interchangeably.

In some embodiments, terms such as wireless access scheme and waveform may be used interchangeably.

In some embodiments, the terms "precoding", "precoder", "weight", "precoding weight", "quasi -co-location (QCL)", "transmission configuration indication (TCI) state", "spatial relation", "spatial domain filter", "transmission power", "phase rotation", "antenna port", "antenna port group", "layer", "the number of layers", "rank", "resource", "resource set", "resource group", "beam", "beam width", "beam angular degree", "antenna", "antenna element, " and "panel " may be used interchangeably.

In some embodiments, the terms "frame", "radio frame", "subframe", "slot", "sub-slot", "mini-slot", "symbol", "symbol", "transmission time interval (TTI)" and the like may be used interchangeably.

In some embodiments, "acquire", "get", "obtain", "receive", "transmit", "send and/or receive" can be interchangeable, and can be interpreted as receiving from other entities, obtaining from protocols, obtaining by self-processing, autonomous implementation, etc.

In some embodiments, terms such as "send", "report", "deliver", "transmit", "send and/or receive" can be used interchangeably.

In some embodiments, "predetermined" and "preset" can be interpreted as pre-specified in a protocol, etc., or can be interpreted as a pre-set action performed by a device, etc.

In some embodiments, determining can be interpreted as concluding, deciding, judging, calculating, computing, processing, deriving, investigating, retrieving, looking up, searching, inquiring, ascertaining, receiving, transmitting, input, output, accessing, resolving, selecting, choosing, establishing, comparing, "assuming", "expecting", "considering", broadcasting, notifying, communicating, forwarding, configuring, reconfiguring, allocating, mapping, assigning, etc., but is not limited to.

In some embodiments, the determination or judgment can be performed by a value represented by 1 bit (0 or 1), or by a true or false value (Boolean value) represented by true or false, or by comparison of numerical values (for example, comparison with a predetermined value), but is not limited thereto.

In some embodiments, "network" can be interpreted as devices included in the network (e.g., access network equipment, core network equipment, etc.).

In some embodiments, obtaining data, information, etc. may comply with the laws and regulations of the country where the data is obtained.

In some embodiments, data, information, etc. may be obtained with the user's consent.

In addition, each element, each row, or each column in the table of the embodiment of the present disclosure can be implemented as an independent embodiment, and the combination of any elements, any rows, and any columns can also be implemented as an independent embodiment.

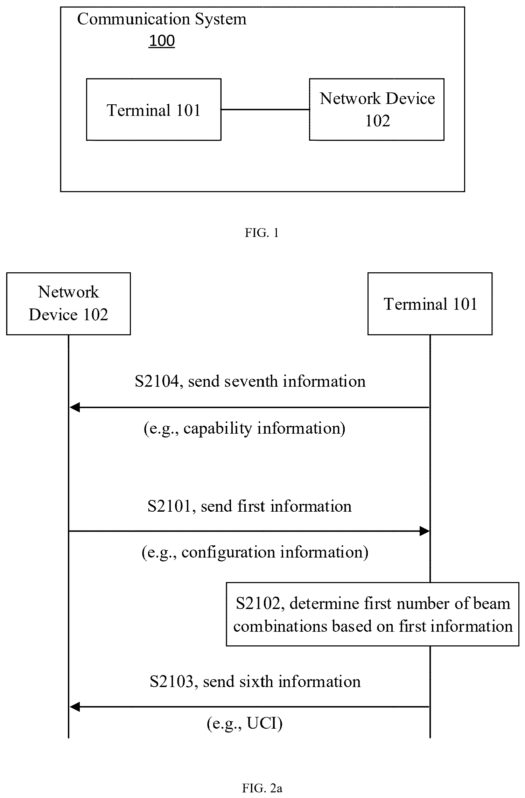

FIG. 1 is a schematic diagram showing a communication system architecture according to an embodiment of the present disclosure.

As shown in FIG. 1, a communication system 100 includes a terminal 101 and a network device 102.

In some embodiments, the network device 102 may include at least one of an access network device and a core network device.

In some embodiments, the access network device is, for example, a node or device that accesses a terminal to a wireless network. The access network device may include an evolved NodeB (eNB), a next generation evolved NodeB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, and at least one of an access node in a wireless fidelity (WiFi) system, but is not limited thereto.

In some embodiments, the technical solution of the present disclosure can be applied to the Open RAN architecture. In this case, the interfaces between or within the access network devices involved in the embodiments of the present disclosure can be transformed into internal interfaces of the Open RAN, and the processes and information interactions between these internal interfaces can be implemented through software or programs.

In some embodiments, the access network device may be formed of a centralized unit (CU) and a distributed unit (DU), where the CU may also be referred to as a control unit. A CU-DU structure may be used to separate the protocol layers of the access network device, with some functions of the protocol layers centrally controlled by the CU and some or all functions of the remaining protocol layers distributed in the DU, which is centrally controlled by the CU, but is not limited thereto.

In some embodiments, the core network device may be a single device including one or more network elements, or may be multiple devices or device groups, each including all or part of an evolved packet core (EPC), a 5G core network (5GCN), or a next-generation core (NGC). The network elements may be virtual or physical.

It can be understood that the communication system described in the embodiment of the present disclosure is for the purpose of more clearly illustrating the technical solution of the embodiment of the present disclosure, and does not constitute a limitation on the technical solution provided by the embodiment of the present disclosure. Those of ordinary skill in the art can know that with the evolution of the system architecture and the emergence of new service scenarios, the technical solution provided by the embodiment of the present disclosure is also applicable to similar technical problems.

The following embodiments of the present disclosure may be applied to the communication system 100 shown in FIG. 1, or a portion thereof, but are not limited thereto. The entities shown in FIG. 1 are illustrative only. The communication system may include all or a portion of the entities shown in FIG. 1, or may include other entities other than FIG. 1. The number and configuration of the entities may be arbitrary. The connections between the entities are illustrative only. The entities may be connected or disconnected, and the connections may be in any manner, including direct or indirect, wired or wireless.

Embodiments of the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G New Radio (NR), Future Radio Access (FRA), New Radio Access Technology (RAT), New Radio (NR), New Radio Access (NX), Future Generation Radio Access (FX), Global System for Mobile communications (GSM^{®}), CDMA2000, Ultra Mobile Broadband (UMB), and the like. These standards include IEEE 802.11 (Wi-Fi^{®}), IEEE 802.16 (WiMAX^{®}), IEEE 802.20, ultra-wideband (UWB), Bluetooth^{®}, public land mobile network (PLMN) networks, device-to-device (D2D) systems, machine-to-machine (M2M) systems, Internet of Things (IoT) systems, vehicle-to-everything (V2X), systems utilizing other communication methods, and next-generation systems based on and extending these methods. In addition, a combination of multiple systems (for example, a combination of LTE or LTE-A and 5G, etc.) can also be applied.

In the embodiments of the present disclosure, the network device may use four TRPs to provide services to a terminal. The network device may configure a channel measurement resource (CMR) containing N CSI-RS resources. This means that the network device indicates N TRPs. At the same time, the network device also needs to configure the number of beams to be selected for each CSI-RS resource (i.e., for each TRP). It will be appreciated that beams can be referred to as spatial domain basis vectors (SD basis). That is, M beam combinations are configured through RRC signaling of the network device, and each beam combination contains the number of beams corresponding to each CSI-RS resource.

It should be understood that the beam in the present disclosure can be equivalently replaced with the SD basis.

The SD basis is related to the number of CSI-RS resource ports, such as N1, N2, O1, and O2. N1 represents the number of ports in the first dimension; N2 represents the number of ports in the second dimension; O1 represents the oversampling number (or oversampling rate) in the first dimension; and O2 represents the oversampling number (or oversampling rate) in the second dimension. The first dimension can be, for example, the horizontal dimension, and the second dimension can be, for example, the vertical dimension.

In the embodiments of the present disclosure, the following partial beam combination method is provided. As shown in Table 1,

**Table 1**

| NTRP | {Lₙ} combination |
|---|---|
| | {2} |
| 1 | {4} |
| | {6} |
| | {2,2} |
| 2 | {2,4}, {4,2} |
| | {4,4} |
| | {2,2,2} |
| 3 | {2,2,4} {2,4,2} {4,2,2} |
| | {4,4,4} |
| | {2,2,2,2} |
| | {2,2,2,4} |
| 4 | {2,2,4,4} |
| | {4,4,4,4} |

Where, N_{TRP} represents the number of TRPs, and may also represent the number of CSI-RS resources included in a CMR. Lₙ represents the number of beams corresponding to each TRP or CSI-RS resource.

As can be seen from Table 1, when N_{TRP} is greater than 2, the number of beams of at least one TRP being 6 is not currently supported. At the same time, the number of beam combinations that the terminal can maintain simultaneously can be 1, 2, or 4. That is, the terminal needs to select a beam combination from 1, 2, or 4 beam combinations and report it to the network device. Based on Table 1, when N_{TRP} is 3, the number of configurable beam combinations is already greater than 4. If the number of beams of at least one TRP being 6 is further supported, the number of configurable beam combinations supported will be even greater. Therefore, how to configure the beam combinations that the terminal needs to maintain simultaneously is a problem that needs to be solved.

Of course, it is understandable that in some embodiments, when the number of beam combinations is 1, the terminal may not report.

FIG. 2a is an interactive diagram illustrating a beam combining determination method according to an embodiment of the present disclosure. As shown in FIG. 2a, the embodiment of the present disclosure relates to a beam combining determination method for a communication system 100, the method comprising:
**Step S2101:** The network device 102 sends first information to the terminal 101.

In some embodiments, the terminal 101 receives first information sent by the network device 102.

In some embodiments, the first information is, for example, "instruction information", "configuration information", etc. The present disclosure does not limit the name of the first information.

In some embodiments, the first information may be an RRC signaling.

In some embodiments, the first information is used to indicate a first number of beam combinations.

In some embodiments, the beam combination in the present disclosure may also be referred to as a spatial domain basis vector combination, a number-of-beam combination, a spatial domain basis vector quantity combination, etc. The present disclosure does not limit the name of the beam combination.

It is understood that in the subsequent embodiments of the present disclosure, the term "beam combination" will be used to describe the subsequent embodiments. However, it should be understood that beam combination can also be replaced by any of the above names.

In some embodiments, the network device 102 sends an RRC signaling. The RRC signaling includes the first information. Optionally, the terminal 101 receives the RRC signaling.

In some embodiments, the terminal may determine the number of CSI-RS resources in a CMR.

In some embodiments, the first information is used to indicate the number of CSI-RS resources. The first information is also used to indicate a first number of beam combinations.

For example, the terminal receives RRC signaling, which indicates a first number of beam combinations and a number of CSI-RS resources.

In some embodiments, the terminal may receive eighth information, where the eighth information is used to indicate the number of CSI-RS resources. The eighth information is different from the first information.

It is understood that in various embodiments of the present disclosure, the CSI-RS resources involved may be CSI-RS resources in a CMR. In various embodiments of the present disclosure, the number of CSI-RS resources involved may refer to the number of CSI-RS resources in a CMR.

In some embodiments, the beam combination includes one or more numbers-of-beams, where each number-of-beam may correspond to one CSI-RS resource.

In some embodiments, the number of CSI-RS resources is different and the maximum value of the first number is the same.

Optionally, when the number of CSI-RS resources is different, the maximum value of the first number is the same.

Optionally, in a case where the number of CSI-RS resources is different, the maximum value of the first number is the same.

Optionally, in response to the number of CSI-RS resources being different, the maximum value of the first number is the same.

For example, when the CSI-RS resource is 1, the maximum value of the first number may be 4. When the CSI-RS resource is greater than 1, the maximum value of the first number may also be 4.

In some embodiments, the number of CSI-RS resources is different, and the maximum value of the first number is different.

Optionally, when the number of CSI-RS resources is different, the maximum value of the first number is different.

Optionally, in a case that the number of CSI-RS resources is different, the maximum value of the first number is different.

Optionally, in response to the number of CSI-RS resources being different, the maximum value of the first number is different.

For example, when the CSI-RS resource is 1, the maximum value of the first number may be 2. When the CSI-RS resource is greater than 1, the maximum value of the first number may be 4.

In some embodiments, the beam combination includes one or more numbers-of-beams, where each number-of-beam may correspond to a TRP.

In some embodiments, the number of TRPs is different and the maximum value of the first number is the same.

Optionally, when the number of TRPs is different, the maximum value of the first number is the same.

Optionally, in a case that the number of TRPs is different, the maximum value of the first number is the same.

Optionally, in response to the number of TRPs being different, the maximum value of the first number is the same.

For example, when the number of TRPs is 1, the maximum value of the first number may be 4. When the number of TRPs is greater than 1, the maximum value of the first number may also be 4.

In some embodiments, the number of TRPs is different and the maximum value of the first number is different.

Optionally, when the number of TRPs is different, the maximum value of the first number is different.

Optionally, in a case that the number of TRPs is different, the maximum value of the first number is different.

Optionally, in response to the number of TRPs being different, the maximum value of the first number is different.

For example, when the number of TRPs is 1, the maximum value of the first number may be 2. When the number of TRPs is greater than 1, the maximum value of the first number may be 4.

In some embodiments, the CSI-RS resource is greater than one, and the beam combination includes multiple numbers-of-beams. The multiple numbers-of-beams in the beam combination are associated with the multiple CSI-RS resources in a preset order.

Optionally, when the CSI-RS resource is greater than one, the beam combination includes multiple numbers-of-beams. The multiple numbers-of-beams in the beam combination are associated with the multiple CSI-RS resources in a preset order.

Optionally, in a case that the CSI-RS resource is greater than one, the beam combination includes multiple numbers-of-beams. The multiple numbers-of-beams in the beam combination are associated with the multiple CSI-RS resources according to a preset order.

Optionally, in response to the CSI-RS resource being greater than one, the beam combination includes multiple numbers-of-beams. The multiple numbers-of-beams in the beam combination are associated with the multiple CSI-RS resources in a preset order.

For example, in Table 1, when there are four CSI-RS resources, there are multiple beam combinations. The beam combination of {2, 2, 2, 4} is taken as an example. This means that one CSI-RS resource corresponds to four beams, while the remaining CSI-RS resources correspond to two beams. How do the numbers-of-beams in the beam combination correspond to the four CSI-RS resources in a CMR? It can determine that the corresponding number-of-beam in the beam combination is correspond to one CSI-RS resource among the four CSI-RS resources based on a preset order.

For example, the preset order can be based on the size of the CSI-RS resource identifier, in descending order. That is, 4 in the beam combination {2, 2, 2, 4} corresponds to the CSI-RS resource with the smallest CSI-RS resource identifier. For another example, the preset order can be based on the size of the CSI-RS resource identifier, in descending order. That is, 4 in the beam combination {2, 2, 2, 4} corresponds to the CSI-RS resource with the largest CSI-RS resource identifier. For another example, a suitable order can be predefined based on the CSI-RS resource identifier. The specific setting can be based on actual conditions and is not limited by this disclosure.

The identifier can be an identity (ID) or an index.

**Step S2102:** The terminal 101 determines the first number of beam combinations based on the first information.

In some embodiments, the terminal 101 receives the first information and determines the first number of beam combinations indicated by the first information.

In some embodiments, the terminal 101 receives an RRC signaling that configures one or more beam combinations. The terminal 101 uses the one or more beam combinations configured by the RRC signaling as the first number of beam combinations. It should be understood that in various embodiments of the present disclosure, "configure" and "indicate" can be used interchangeably.

For example, the terminal 101 receives the RRC signaling, and the RRC signaling is configured with 1 beam combination. The terminal 101 uses the 1 beam combination configured by the RRC signaling as the first number of beam combinations. For another example, the terminal 101 receives the RRC signaling, and the RRC signaling is configured with 2 beam combinations. The terminal 101 uses the 2 beam combinations configured by the RRC signaling as the first number of beam combinations. For another example, the terminal 101 receives the RRC signaling, and the RRC signaling is configured with 4 beam combinations. The terminal 101 uses the 4 beam combinations configured by the RRC signaling as the first number of beam combinations. It can be understood that the terminal 101 can use all beam combinations configured in the RRC signaling as the first number of beam combinations.

**Step S2103:** The terminal 101 sends sixth information to the network device 102.

In some embodiments, the network device 102 receives the sixth information sent by the terminal 101.

In some embodiments, the sixth information is, for example, "uplink control information (UCI)", "CSI report", "CSI measurement report", "measurement report", "feedback information", "report information", etc.

In some embodiments, the sixth information may include a precoding matrix indicator (PMI).

In some embodiments, the sixth information may include a channel quality indicator (CQI).

In some embodiments, the sixth information may include a rank indicator (RI).

In some embodiments, the sixth information may include a layer indicator (LI).

In some embodiments, the sixth information may include at least one of: PMI, CQI, RI, and LI.

In some embodiments, the sixth information is used to "indicate one beam combination among the first number of beam combinations".

In some embodiments, the sixth information is used to "indicate a plurality of beam combinations among the first number of beam combinations".

It can be understood that the beam combination indicated by the sixth information may be a beam combination corresponding to at least one of the PMI, CQI, RI, and LI reported by the terminal 101. Of course, the present disclosure does not limit the name of the sixth information.

In some embodiments, the sixth information typically indicates one beam combination.

In some embodiments, the terminal 101 sends UCI. The UCI includes the sixth information. Optionally, the network device 102 receives the UCI.

In some embodiments, the number of bits in the sixth information used to indicate one beam combination in the first number of beam combinations may be determined according to the first number or a maximum value of the first number.

The number of bits may also be referred to as bit overhead, bit count, etc., and the name is not limited.

For example, if the first number is 4, the number of bits used in the sixth information to indicate one beam combination in the first number of beam combinations may be 2 bits. For another example, if the maximum value of the first number is 4, the number of bits used in the sixth information to indicate one beam combination in the first number of beam combinations may be 2 bits. For another example, if the first number is 2, the number of bits used in the sixth information to indicate one beam combination in the first number of beam combinations may be 1 bit. For another example, if the maximum value of the first number is 2, the number of bits used in the sixth information to indicate one beam combination in the first number of beam combinations may be 1 bit.

In some embodiments, the UCI includes an X bit. The X bit is used to indicate one of the first number of beam combinations. X may be determined based on the first number or the maximum value of the first number. For example, if the first number or the maximum value of the first number is 4, X may be 2. For another example, if the first number or the maximum value of the first number is 2, X may be 1.

For example, if the first number or the maximum value of the first number is 2, it indicates that there are two beam combinations, or at most two beam combinations. Therefore, one bit can be used to indicate the two beam combinations. For example, the bit value of the one bit is 0 or 1. For another example, if the first number or the maximum value of the first number is 4, it indicates that there are four beam combinations, or at most four beam combinations. Therefore, two bits can be used to indicate the four beam combinations. For example, the bit value of the two bits is 00, 01, 10, or 11.

Of course, which beam combination each bit value corresponds to can be set according to actual conditions, and this disclosure does not limit it.

Step **S2104:** The terminal 101 sends seventh information to the network device 102.

In some embodiments, the network device 102 receives the seventh information sent by the terminal 101.

In some embodiments, the seventh information is, for example, "indication information", "feedback information", "report information", "capability information", "terminal capability information", "capability report", "terminal capability report", "capability report information", "terminal capability report information", "capability feedback information", "terminal capability feedback information", etc.

In some embodiments, the seventh information may include the capability of the terminal to support a maximum value of the first number.

In some embodiments, the seventh information is used to indicate a maximum value of the first number supported by the terminal.

In some embodiments, the seventh information may be information for indicating a maximum value of the first number supported by the terminal.

In some embodiments, the seventh information may indicate one maximum value of the first number supported by the terminal.

For example, for different numbers of CSI-RS resources, the maximum value of the first number that the terminal can support is the same. Therefore, this value can be used as the maximum value of the first number supported by the terminal. For example, when the number of CSI-RS resources is 1 or the number of CSI-RS resources is greater than 1, the maximum value of the first number that the terminal can support can be 4. The number of CSI-RS resources can be the number of CSI-RS resources included in a CMR.

For example, for different TRP numbers, the maximum value of the first number that the terminal can support is the same. Therefore, this value can be used as the maximum value of the first number supported by the terminal. For example, when the number of TRP is 1 or the number of TRP is greater than 1, the maximum value of the first number that the terminal can support can be 4.

In some embodiments, the seventh information may indicate multiple maximum values of the first number supported by the terminal.

For example, for different numbers of CSI-RS resources, the terminal may support different maximum values of the first number, respectively. Therefore, the maximum value of the first number supported by the terminal in the case of different numbers of CSI-RS resources can be indicated respectively. For example, when the number of CSI-RS resources is 1, the maximum value of the first number supported by the terminal may be 2. When the number of CSI-RS resources is greater than 1, the maximum value of the first number supported by the terminal may be 4. The number of CSI-RS resources may be the number of CSI-RS resources included in a CMR.

For example, for different TRP numbers, the terminal may support different maximum values of the first number, respectively. Therefore, the maximum value of the first number supported by the terminal under different TRP numbers can be indicated respectively. For example, when the TRP number is 1, the maximum value of the first number supported by the terminal may be 2. When the TRP number is greater than 1, the maximum value of the first number supported by the terminal may be 4.

In some embodiments, step S2104 may be performed before step S2101. In this case, the network device 102 may configure the corresponding first number of beam combinations based on the maximum value of the first number supported by the terminal 101 reported by the terminal 101, and indicate this to the terminal 101 through step S2101.

In some embodiments, step S2104 may be performed after step S2101. In this case, the network device 102 may determine the first number of beam combinations based on a preset rule. If the first number configured by the network device 102 is greater than the maximum first number supported by the terminal 101, the terminal 101 may determine one or more beam combinations supported by itself from the first number of beam combinations configured by the network device 102 according to a predefined method.

For example, the network device 102 sends first information indicating four beam combinations, while the terminal 101 may only support a maximum of two beam combinations. The terminal 101 may receive the first information and, based on the four beam combinations indicated in the first information, determine two of the beam combinations.

In the embodiments of the present disclosure, the step S2101 can be implemented as an independent embodiment, the step S2102 can be implemented as an independent embodiment, the step S2103 can be implemented as an independent embodiment, the step S2104 can be implemented as an independent embodiment, the step S2101+step S2102 can be implemented as an independent embodiment, the step S2101+step S2102+step S2103 can be implemented as an independent embodiment, and the step S2101+step S2102+step S2103 can be implemented as an independent embodiment, but is not limited to this.

In some embodiments, the step S2103 and the step S2104 are optional, and one or more of these steps may be omitted or replaced in different embodiments.

In some embodiments, the step S2104 is optional, and one or more of these steps may be omitted or replaced in different embodiments.

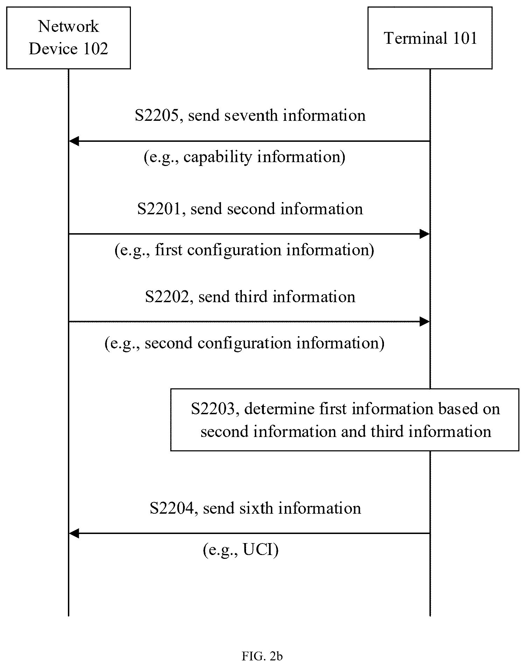

FIG. 2b is an interactive diagram illustrating another method for determining beam combining according to an embodiment of the present disclosure. As shown in FIG. 2b, the embodiment of the present disclosure relates to a method for determining beam combining, which is used in a communication system 100 and includes:
**Step S2201:** The network device 102 sends second information to the terminal 101.

The optional implementation of the step S2201 can refer to the optional implementation of the step S2101 in FIG. 2a and other related parts in the embodiment involved in FIG. 2a, which will not be repeated here.

In some embodiments, the terminal 101 receives second information sent by the network device 102.

In some embodiments, the second information is, for example, "instruction information", "configuration information", etc. The present disclosure does not limit the name of the second information.

In some embodiments, the second information may be an RRC signaling.

In some embodiments, the second information is used to indicate a second number of beam combinations.

In some embodiments, the network device 102 sends the RRC signaling. The RRC signaling includes the second information. Optionally, the terminal 101 receives the RRC signaling.

In some embodiments, the second information may be referred to as first configuration information.

In some embodiments, in some embodiments, the terminal receives the second information, where the second information is used to indicate the number of CSI-RS resources. For example, the second information is also used to indicate a second number of beam combinations.

In some embodiments, the terminal may receive eighth information, where the eighth information is used to indicate the number of CSI-RS resources. The eighth information is different from the second information.

**Step S2202:** The network device 102 sends third information to the terminal 101.

The optional implementation of the step S2202 can refer to the optional implementation of the step S2101 in FIG. 2a and other related parts in the embodiment involved in FIG. 2a, which will not be repeated here.

In some embodiments, the terminal 101 receives third information sent by the network device 102.

In some embodiments, the third information is, for example, "instruction information", "configuration information", etc. The present disclosure does not limit the name of the third information.

In some embodiments, the third information may be a MAC CE.

In some embodiments, the third information may be DCI.

In some embodiments, the third information is used to indicate the first number of beam combinations from the second number of beam combinations.

In some embodiments, the network device 102 sends the MAC CE. The MAC CE includes the third information. Optionally, the terminal 101 receives the MAC CE.

In some embodiments, the network device 102 sends the DCI. The DCI includes the third information. Optionally, the terminal 101 receives the DCI.

In some embodiments, the third information may be referred to as second configuration information.

In some embodiments, in some embodiments, the terminal receives the third information, where the third information is used to indicate the number of CSI-RS resources. For example, the third information is also used to indicate the first number of beam combinations from the second number of beam combinations.

In some embodiments, the terminal may receive eighth information, where the eighth information is used to indicate the number of CSI-RS resources. The eighth information is different from the third information.

**Step S2203:** The terminal 101 determines the first information based on the second information and the third information.

The optional implementation of the step S2203 can refer to the optional implementation of the step S2102 in FIG. 2a and other related parts in the embodiment involved in FIG. 2a, which will not be described in detail here.

In some embodiments, the terminal 101 receives the second information and the third information and may determine the first information based on the second information and the third information, that is, determine the first number of beam combinations.

In some embodiments, the terminal 101 receives second information and may determine a second number of beam combinations based on the second information. The terminal 101 receives the third information and determines a first number of beam combinations from the second number of beam combinations based on the third information.

In some embodiments, the terminal 101 receives an RRC signaling, and the terminal 101 can determine the second number of beam combinations based on the RRC signaling. It is understood that the RRC signaling configures the second number of beam combinations. The terminal 101 receives a MAC CE and activates the first number of beam combinations from the second number of beam combinations via the MAC CE.

For example, terminal 101 receives the RRC signaling, which configures 5 beam combinations. The terminal 101 receives the MAC CE, which activates 4 beam combinations among the 5 beam combinations configured by RRC signaling.

In some embodiments, the terminal 101 receives the RRC signaling, and the terminal 101 can determine a second number of beam combinations based on the RRC signaling. It is understood that the RRC signaling configures the second number of beam combinations, and the second number of beam combinations can include the first number of beam combinations corresponding to multiple codepoints in the first field. The terminal 101 receives the DCI, and the first field of the DCI can indicate one of the multiple codepoints. This allows the terminal 101 to determine the first number of beam combinations corresponding to the codepoint indicated by the DCI.

For example, the terminal 101 receives the RRC signaling, which configures 12 beam combinations, including 4 beam combinations corresponding to the codepoint 1, 4 beam combinations corresponding to the codepoint 2, and 4 beam combinations corresponding to the codepoint 3. The terminal 101 receives the DCI, the first field of which indicates a codepoint, such as the codepoint 2. The terminal can then indicate the 4 beam combinations corresponding to the codepoint 2 based on the codepoint 2 in the DCI.

In some embodiments, among the first number of beam combinations corresponding to different codepoints, some codepoints may correspond to the same first number of beam combinations.

For example, the terminal 101 receives the RRC signaling that configures five beam combinations, including four beam combinations corresponding to the codepoint 1 and four beam combinations corresponding to the codepoint 2. Among the four beam combinations corresponding to the codepoint 1 and the four beam combinations corresponding to the codepoint 2, three of them may be identical. The terminal 101 receives the DCI, the first field of which indicates a codepoint, such as the codepoint 2. Based on the codepoint 2 in the DCI, the terminal can indicate the four beam combinations corresponding to the codepoint 2.

In some embodiments, if the second number of beam combinations includes the first number of beam combinations corresponding to one codepoint in the first filed, the DCI may not be required for indication.

Of course, it should be understood that the first number and the number of beam combinations indicated by the second information and the third information in the above example are merely exemplary descriptions, and a greater or lesser number may be selected according to actual circumstances, which is not limited in this disclosure.

In some embodiments, the third information is the DCI, and the third information may include the first field. The first field is used to carry the codepoint.

Optionally, when the third information is the DCI, the third information may include the first field. The first field is used to carry the codepoint.

Optionally, in a case that the third information is the DCI, the third information may include the first field, where the first field is used to carry the codepoint.

Optionally, in response to the third information being the DCI, the third information may include the first field, where the first field is used to carry the codepoint.

In some embodiments, the first filed is, for example, a "beam combination indication filed", a "beam number combination indication filed", a "spatial domain basis vector combination indication filed", a "spatial domain basis vector number combination indication filed", a "spatial domain basis vector number combination indication filed", and the like.

In some embodiments, when the RRC signaling indicates only one beam combination, the first field may not be included in the DCI.

In some embodiments, when the RRC signaling indicates only one beam combination, the DCI may not include the codepoint indicating the first number of beam combinations.

Step S2204: The terminal 101 sends sixth information to the network device 102.

The optional implementation of the step S2204 can refer to the optional implementation of the step S2103 in FIG. 2a and other related parts in the embodiment involved in FIG. 2a, which will not be described in detail here.

In some embodiments, the sixth information is, for example, "UCI", "CSI report", "CSI measurement report", "measurement report", "feedback information", "report information", etc. The present disclosure does not limit the name of the sixth information.

In some embodiments, the sixth information may include a PMI.

In some embodiments, the sixth information may include a CQI.

In some embodiments, the sixth information may include a RI.

In some embodiments, the sixth information may include a LI.

In some embodiments, the sixth information may further include: at least one of PMI, CQI, RI, and LI.

It can be understood that the beam combination indicated by the sixth information can be a beam combination corresponding to at least one of the PMI, CQI, RI, and LI reported by the terminal 101.

In some embodiments, the number of bits in the sixth information used to indicate one beam combination in the first number of beam combinations can be determined according to the first number or a maximum value of the first number.

The number of bits may also be referred to as bit overhead, bit count, etc., and the name is not limited.

Step S2205: The terminal 101 sends seventh information to the network device 102.

The optional implementation of the step S2205 can refer to the optional implementation of the step S2104 in FIG. 2a and other related parts in the embodiment involved in FIG. 2a, which will not be repeated here.

In some embodiments, the seventh information is, for example, "indication information", "feedback information", "report information", "capability information", "terminal capability information", "capability report", "terminal capability report", "capability report information", "terminal capability report information", "capability feedback information", "terminal capability feedback information", etc. This disclosure does not limit the name of the seventh information.

In some embodiments, the seventh information may indicate one maximum value of the first number supported by the terminal.

In some embodiments, the seventh information may indicate multiple maximum values of the first number supported by the terminal.

In some embodiments, the step S2205 may be performed before the step S2201 and/or the step S2202. In this case, the network device 102 may configure the corresponding first number of beam combinations based on the maximum value of the first number supported by the terminal 101 reported by the terminal 101, and indicate this to the terminal 101 through the step S2201 and/or the step S2202.

In some embodiments, the step S2205 may be performed after the step S2202. In this case, the network device 102 may determine the first number of beam combinations based on a preset rule. If the first number configured by the network device 102 is greater than the maximum first number supported by the terminal 101, the terminal 101 may determine one or more beam combinations supported by itself from the first number of beam combinations configured by the network device 102 according to a predefined method.

For example, the network device 102 sends second and third information indicating four beam combinations. However, the terminal 101 may only support a maximum of two beam combinations. The terminal 101 may receive the second and third information and, based on the four beam combinations indicated by the second and third information, determine two of them.

In the embodiments of the present disclosure, the step S2201 can be implemented as an independent embodiment, the step S2202 can be implemented as an independent embodiment, the step S2203 can be implemented as an independent embodiment, the step S2204 can be implemented as an independent embodiment, the step S2205 can be implemented as an independent embodiment, the step S2201+step S2202+step S2203 can be implemented as an independent embodiment, the step S2201+step S2202+step S2203+step S2204 can be implemented as an independent embodiment, and the step S2201+step S2202+step S2203+step S2204+step S2205 can be implemented as an independent embodiment, but are not limited to this.

In some embodiments, the step S2204 and the step S2205 are optional, and one or more of these steps may be omitted or replaced in different embodiments.

In some embodiments, the step S2205 is optional, and one or more of these steps may be omitted or replaced in different embodiments.

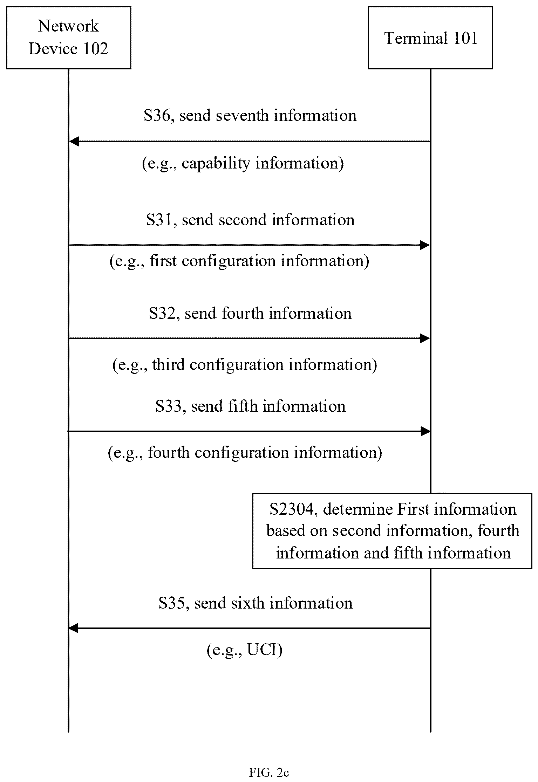

FIG. 2c is an interactive diagram illustrating another method for determining beam combining according to an embodiment of the present disclosure. As shown in FIG. 2c, the embodiment of the present disclosure relates to a method for determining beam combining, which is used in a communication system 100 and includes:
**Step S2301:** The network device 102 sends second information to the terminal 101.

The optional implementations of the step S2301 may refer to the optional implementations of the step S2101 in FIG. 2a and other related parts in the embodiment involved in FIG. 2a. The optional implementations of the step S2301 may refer to the optional implementations of the step S2201 in FIG. 2b and other related parts in the embodiment involved in FIG. 2b. These will not be described in detail here.

In some embodiments, the second information is, for example, "instruction information", "configuration information", etc. The present disclosure does not limit the name of the second information.

In some embodiments, the second information may be an RRC signaling.

In some embodiments, the second information is used to indicate a second number of beam combinations.

**Step S2302:** The network device 102 sends fourth information to the terminal 101.

The optional implementations of the step S2302 can refer to the optional implementations of the step S2101 in FIG. 2a and other related parts of the embodiment involved in FIG. 2a. The optional implementations of the step S2302 can refer to the optional implementations of the step S2202 in FIG. 2b and other related parts of the embodiment involved in FIG. 2b. These will not be described in detail here.

In some embodiments, the fourth information is, for example, "instruction information", "configuration information", etc. The present disclosure does not limit the name of the fourth information.

In some embodiments, the fourth information may be a MAC CE.

In some embodiments, the fourth information is used to activate a third number of beam combinations from the second number of beam combinations.

It can be understood that in various embodiments of the present disclosure, "activate", "indicate", and "determine" can be used interchangeably, and the present disclosure does not limit this.

In some embodiments, the network device 102 sends a MAC CE. The MAC CE includes the fourth information. Optionally, the terminal 101 receives the MAC CE.

In some embodiments, the fourth information may be the third configuration information. The second configuration information and the third configuration information may be the same configuration information. For example, the second configuration information is a MAC CE and the third configuration information is a MAC CE.

**Step S2303:** The network device 102 sends the fifth information to the terminal 101.

The optional implementations of the step S2303 can refer the optional implementations of the step S2101 in FIG. 2a and other related parts of the embodiment involved in FIG. 2a. The optional implementations of the step S2303 can refer to the optional implementations of the step S2202 in FIG. 2b and other related parts of the embodiment involved in FIG. 2b. These will not be described in detail here.

In some embodiments, the terminal 101 receives the fifth information sent by the network device 102.

In some embodiments, the fifth information is, for example, "instruction information", "configuration information", etc. The present disclosure does not limit the name of the fifth information.

In some embodiments, the fifth information may be DCI.

In some embodiments, the fifth information is used to indicate a first number of beam combinations from a third number of beam combinations.

In some embodiments, the network device 102 sends DCI, where the DCI includes the fifth information. Optionally, the terminal 101 receives the DCI.

In some embodiments, the fifth information may be the fourth configuration information. The second configuration information and the fourth configuration information may be the same configuration information. For example, the second configuration information is DCI, and the fourth configuration information is DCI.

**Step S2304:** The terminal 101 determines the first information based on the second information, the fourth information and the fifth information.

The optional implementations of the step S2304 can refer to the optional implementations of the step S2102 in FIG. 2a and other related parts of the embodiment involved in FIG. 2a. The optional implementations of the step S2304 can refer to the optional implementations of the step S2203 in FIG. 2b and other related parts of the embodiment involved in FIG. 2b. These will not be described in detail here.

In some embodiments, the terminal 101 receives the second information, the fourth information, and the fifth information, and may determine the first information based on the second information, the fourth information, and the fifth information, that is, determine the first number of beam combinations.

In some embodiments, the terminal 101 receives the second information and may determine a second number of beam combinations based on the second information. The terminal 101 receives the fourth information and, using the fourth information, determines a third number of beam combinations from the second number of beam combinations. The terminal 101 receives the fifth information and, using the fifth information, determines the first number of beam combinations from the third number of beam combinations.

In some embodiments, the terminal 101 receives the RRC signaling, and the terminal 101 can determine the second number of beam combinations based on the RRC signaling. It can be understood that the RRC signaling configures the second number of beam combinations. The terminal 101 receives the MAC CE and activates a third number of beam combinations from the second number of beam combinations through the MAC CE. The third number of beam combinations may include the first number of beam combinations corresponding to multiple codepoints in the first field. The terminal 101 receives the DCI, and the first field of the DCI may indicate one of the multiple codepoints. This allows the terminal 101 to determine the first number of beam combinations corresponding to the codepoint indicated by the DCI.

For example, the terminal 101 receives the RRC signaling that configures eight beam combinations. The terminal 101 receives the MAC CE that activates four of the eight beam combinations configured by the RRC signaling. The four beam combinations include two beam combinations corresponding to the codepoint 1 and two beam combinations corresponding to the codepoint 2. The terminal 101 receives the DCI whose first field indicates a codepoint, such as the codepoint 2. Based on the codepoint 2 in the DCI, the terminal can indicate the two beam combinations corresponding to the codepoint 2.

In some embodiments, among the first number of beam combinations corresponding to different codepoints, some codepoints may correspond to the same first number of beam combinations.

For example, the terminal 101 receives the RRC signaling, which configures 8 beam combinations. The terminal 101 receives the MAC CE, which activates 4 beam combinations of the 8 beam combinations configured by the RRC signaling. The 4 beam combinations include 2 beam combinations corresponding to the codepoint 1, 2 beam combinations corresponding to the codepoint 2, and 2 beam combinations corresponding to the codepoint 3. The 2 beam combinations corresponding to the codepoint 3 can be the same as one of the beam combinations corresponding to the codepoint 1 and codepoint 2, respectively. The terminal 101 receives the DCI, the first field of which indicates a codepoint, such as the codepoint 2. The terminal can then indicate the 2 beam combinations corresponding to the codepoint 2 based on the codepoint 2 in the DCI.

In some embodiments, if the third number of beam combinations includes the first number of beam combinations corresponding to one codepoint in the first filed, the DCI may not be required for indication.

Of course, it should be understood that the first number and the number of beam combinations indicated by the second information, the fourth information, and the fifth information in the above example are merely exemplary descriptions, and a greater or lesser number may be selected based on actual conditions, which is not limited in this disclosure.

In some embodiments, the fifth information is the DCI, and the fifth information may include the first field. The first field is used to carry the codepoint.

Optionally, when the fifth information is the DCI, the fifth information may include the first field. The first field is used to carry the codepoint.

Optionally, in a case that the fifth information is the DCI, the fifth information may include the first field. The first field is used to carry the codepoint.

Optionally, in response to the fifth information being the DCI, the fifth information may include the first field, where the first field is used to carry the codepoint.

In some embodiments, when the MAC CE activates only one beam combination, the first field may not be included in the DCI.

In some embodiments, when the MAC CE activates only one beam combination, the DCI may not include the codepoint indicating the first number of beam combinations.

Step S2305: The terminal 101 sends sixth information to the network device 102.

The optional implementations of the step S2305 can refer to the optional implementations of the step S2103 in FIG. 2a and other related parts of the embodiment involved in FIG. 2a. The optional implementations of the step S2305 can refer to the optional implementations of the step S2204 in FIG. 2b and other related parts of the embodiment involved in FIG. 2b. These will not be described in detail here.

In some embodiments, the sixth information is, for example, "UCI", "CSI report", "CSI measurement report", "measurement report", "feedback information", "report information", etc. The present disclosure does not limit the name of the sixth information.

In some embodiments, the sixth information may include a PMI.

In some embodiments, the sixth information may include a CQI.

In some embodiments, the sixth information may include a RI.

In some embodiments, the sixth information may include a LI.

In some embodiments, the sixth information may further include: at least one of PMI, CQI, RI, and LI.

It can be understood that the beam combination indicated by the sixth information can be a beam combination corresponding to at least one of PMI, CQI, RI, and LI reported by the terminal 101.

In some embodiments, the number of bits in the sixth information used to indicate one beam combination in the first number of beam combinations can be determined according to the first number or a maximum value of the first number.

The number of bits may also be referred to as bit overhead, bit count, etc., and the name is not limited.

Step S2306: The terminal 101 sends seventh information to the network device 102.

The optional implementations of the step S2306 can refer to the optional implementations of the step S2104 in FIG. 2a and other related parts of the embodiment involved in FIG. 2a. The optional implementations of the step S2306 can refer to the optional implementations of the step S2205 in FIG. 2b and other related parts of the embodiment involved in FIG. 2b. These will not be described in detail here.

In some embodiments, the seventh information is, for example, "indication information", "feedback information", "report information", "capability information", "terminal capability information", "capability report", "terminal capability report", "capability report information", "terminal capability report information", "capability feedback information", "terminal capability feedback information", etc. This disclosure does not limit the name of the sixth information.

In some embodiments, the seventh information may indicate one maximum value of the first number supported by the terminal.

In some embodiments, the seventh information may indicate multiple maximum values of the first number supported by the terminal.

In some embodiments, the step S2306 may be performed before the step S2301, the step S2302, and/or the step S2303. In this case, the network device 102 may configure the corresponding first number of beam combinations based on the maximum value of the first number supported by the terminal 101 reported by the terminal 101, and indicate this to the terminal 101 through the steps S2301, the step S2302, and/or the step S23032.

In some embodiments, the step S2306 may be performed after the step S2303. In this case, the network device 102 may determine the first number of beam combinations based on a preset rule. If the first number configured by the network device 102 is greater than the maximum first number supported by the terminal 101, the terminal 101 may determine one or more beam combinations supported by itself from the first number of beam combinations configured by the network device 102 according to a predefined method.

For example, the network device 102 sends the second and third information indicating four beam combinations. However, the terminal 101 may only support a maximum of two beam combinations. The terminal 101 may receive the second and third information and, based on the four beam combinations indicated by the second and third information, determine two of them.

In the embodiments of the present disclosure, the step S2301 can be implemented as an independent embodiment, the step S2302 can be implemented as an independent embodiment, the step S2303 can be implemented as an independent embodiment, the step S2304 can be implemented as an independent embodiment, the step S2305 can be implemented as an independent embodiment, the step S2306 can be implemented as an independent embodiment, the step S2301+step S2302+step S2303+step S2304 can be implemented as an independent embodiment, the step S2301+step S2302+step S2303+step S2304+step S2305 can be implemented as an independent embodiment, the step S2301+step S2302+step S2303+step S2304+step S2305 can be implemented as an independent embodiment, the step S2301+step S2302+step S2303+step S2304+step S2305 can be implemented as an independent embodiment, but is not limited to this.

In some embodiments, the step S2305 and the step S2306 are optional, and one or more of these steps may be omitted or replaced in different embodiments.

In some embodiments, the step S2306 is optional, and one or more of these steps may be omitted or replaced in different embodiments.

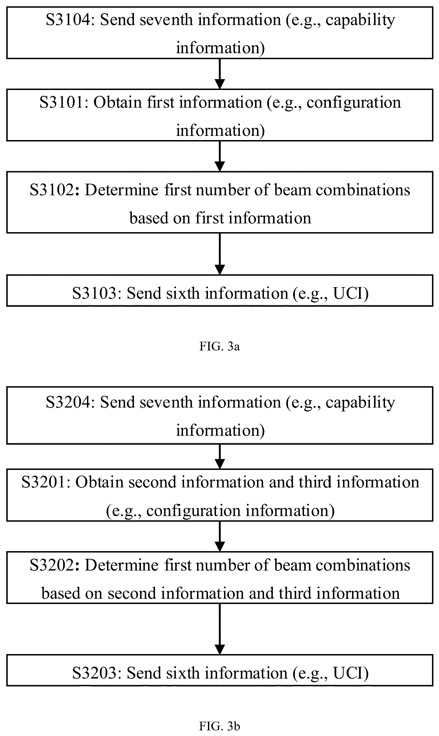

FIG. 3a is a flow chart of a beam combination determination method according to an embodiment of the present disclosure. As shown in FIG. 3a, the present disclosure embodiment relates to a beam combination determination method, which is executed by the terminal 101 and includes:
**Step S3101:** Obtain first information.

The optional implementation of the step S3101 can refer to the optional implementation of the step S2101 in FIG. 2a and other related parts in the embodiment involved in FIG. 2a, which will not be repeated here.

In some embodiments, the terminal 101 receives the first information from the network device 102, but may also receive the first information from other entities. The first information may indicate the first information, that is, the first information may indicate the first number of beam combinations.

In some embodiments, the terminal 101 obtains the first information specified by a protocol.

In some embodiments, the terminal 101 obtains the first information from an upper layer(s).

In some embodiments, the terminal 101 performs processing to obtain the first information.

In some embodiments, the step S3101 is omitted, and the terminal 101 autonomously determines the first information, that is, determines the first number of beam combinations, or the above function is preset or default.

**Step S3102:** Determine a first number of beam combinations based on the first information.

The optional implementation of the step S3102 can refer to the optional implementation of the step S2102 in FIG. 2a and other related parts in the embodiment involved in FIG. 2a, which will not be repeated here.

In some embodiments, the first number of beam combinations is determined based on the first information received by the terminal 101. The first information is configured with the first number of beam combinations.

In some embodiments, the first number of beam combinations is determined based on the RRC signaling received by the terminal 101. The RRC signaling is configured with the first number of beam combinations.

**Step S3103:** Send sixth information.

The optional implementation of the step S3103 can refer to the optional implementation of the step S2103 in FIG. 2a and other related parts in the embodiment involved in FIG. 2a, which will not be repeated here.

In some embodiments, the terminal 101 sends the sixth information to the network device 102, but may also send the sixth information to other entities.

**Step S3104:** Send seventh information.

The optional implementation of the step S3104 can refer to the optional implementation of the step S2104 in FIG. 2a and other related parts in the embodiment involved in FIG. 2a, which will not be repeated here.

In some embodiments, the terminal 101 sends the seventh information to the network device 102, but may also send the seventh information to other entities.

In some embodiments, the execution order of the step S3104 and other steps is not limited, that is, the step S3104 can be executed before, after or simultaneously with any one of the step S3101, the step S3102, and the step S3103, and this disclosure does not limit it.

In the embodiments of the present disclosure, the step S3101 can be implemented as an independent embodiment, the step S3102 can be implemented as an independent embodiment, the step S3103 can be implemented as an independent embodiment, the step S3104 can be implemented as an independent embodiment, the step S3101+step S3102 can be implemented as an independent embodiment, the step S3101+step S3102+step S3103 can be implemented as an independent embodiment, and the step S3101+step S3102+step S3103+step S3104 can be implemented as independent embodiments, but are not limited to this.

In some embodiments, the step S3103 and the step S3104 are optional, and one or more of these steps may be omitted or replaced in different embodiments.

In some embodiments, the step S3104 is optional, and one or more of these steps may be omitted or replaced in different embodiments.

FIG. 3b is a flow chart of another method for determining a beam combination according to an embodiment of the present disclosure. As shown in FIG. 3b, the embodiment of the present disclosure relates to a method for determining a beam combination, which is executed by terminal 101 and includes:

**Step S3201:** Obtain second information and third information.

The optional implementation of the step S3201 can refer to the optional implementation of the step S2201 in FIG. 2b, the optional implementation of the step S2202 in FIG. 2b, and other related parts in the embodiment involved in FIG. 2b, which will not be repeated here.

In some embodiments, the terminal 101 receives the second information from the network device 102, but may also receive the second information from other entities.

In some embodiments, the terminal 101 receives the third information from the network device 102, but may also receive the third information from other entities.

In some embodiments, the terminal 101 obtains the second information specified by the protocol.

In some embodiments, the terminal 101 obtains the third information specified by the protocol.

In some embodiments, the terminal 101 performs processing to obtain the second information.

In some embodiments, the terminal 101 performs processing to obtain the third information.

In some embodiments, the step S3201 is omitted, and the terminal 101 autonomously determines the second information and/or the third information, that is, determines the second number of beam combinations, and/or determines the first number of beam combinations, or the above functions are preset or default.

**Step S3202:** Determine a first number of beam combinations based on the second information and the third information.

The optional implementation of the step S3202 can refer to the optional implementation of the step S2203 in FIG. 2b and other related parts in the embodiment involved in FIG. 2b, which will not be repeated here.

**Step S3203:** Send sixth information.

The optional implementations of the step S3203 can refer to the optional implementations of the step S2103 in FIG. 2a and other related parts of the embodiment involved in FIG. 2a. The optional implementations of the step S3203 can refer to the optional implementations of the step S2204 in FIG. 2b and other related parts of the embodiment involved in FIG. 2b, which will not be described in detail here.

In some embodiments, the terminal 101 sends the sixth information to the network device 102, but may also send the sixth information to other entities.

**Step S3204:** Send seventh information.

The optional implementations of the step S3204 can refer to the optional implementations of the step S2104 in FIG. 2a and other related parts of the embodiment involved in FIG. 2a. The optional implementations of the step S3204 can refer to the optional implementations of the step S2205 in FIG. 2b and other related parts of the embodiment involved in FIG. 2b, which will not be described in detail here.

In some embodiments, the terminal 101 sends the seventh information to the network device 102, but may also send the seventh information to other entities.

In some embodiments, the execution order of the step S3204 and other steps is not limited, that is, the step S3204 can be executed before, after or simultaneously with any one of the step S3201, the step S3202, and the step S3203, and this disclosure does not limit it.

In the embodiments of the present disclosure, the step S3201 can be implemented as an independent embodiment, the step S3202 can be implemented as an independent embodiment, the step S3203 can be implemented as an independent embodiment, the step S3204 can be implemented as an independent embodiment, the step S3201+step S3202 can be implemented as an independent embodiment, the step S3201+step S3202+step S3203 can be implemented as an independent embodiment, and the step S3201+step S3202+step S3203+step S3204 can be implemented as independent embodiments, but are not limited to this.

In some embodiments, the step S3203 and the step S3204 are optional, and one or more of these steps may be omitted or replaced in different embodiments.

In some embodiments, the step S3204 is optional, and one or more of these steps may be omitted or replaced in different embodiments.

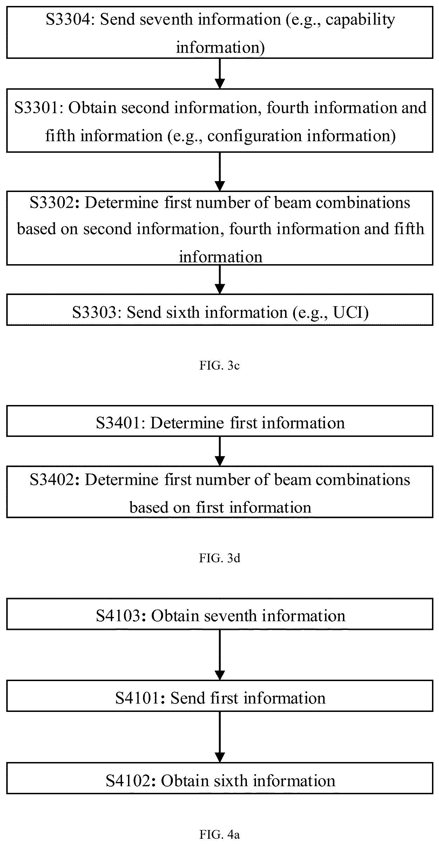

FIG. 3c is a flow chart of another method for determining a beam combination according to an embodiment of the present disclosure. As shown in FIG. 3c, the embodiment of the present disclosure relates to a method for determining a beam combination, which is executed by terminal 101 and includes:

**Step S3301:** Obtain second information, fourth information and fifth information.

The optional implementation of the step S3301 can be found in the optional implementation of the step S2301, the step S2302 and the step S2303 in FIG. 2c, the optional implementation of the step S2302 in FIG. 2c, the optional implementation of the step S2303 in FIG. 2c, and other related parts in the embodiment involved in FIG. 2c, which will not be repeated here.

In some embodiments, the terminal 101 receives the second information from the network device 102, but may also receive the second information from other entities.

In some embodiments, the terminal 101 receives the fourth information from the network device 102, but may also receive the fourth information from other entities.

In some embodiments, the terminal 101 receives the fifth information from the network device 102, but may also receive the fifth information from other entities.

In some embodiments, terminal 101 obtains the second information specified by the protocol.

In some embodiments, terminal 101 obtains the fourth information specified by the protocol.

In some embodiments, terminal 101 obtains the fifth information specified by the protocol.

In some embodiments, terminal 101 obtains the second information from upper layer(s).

In some embodiments, the terminal 101 obtains the fourth information from an upper layer(s).

In some embodiments, the terminal 101 obtains the fifth information from an upper layer(s).

In some embodiments, terminal 101 performs processing to obtain the second information.

In some embodiments, the terminal 101 performs processing to obtain the fourth information.

In some embodiments, the terminal 101 performs processing to obtain the fifth information.

In some embodiments, the step S3301 is omitted, and the terminal 101 autonomously determines the first information, that is, determines the first number of beam combinations, or the above function is preset or default.

**Step S3302:** Determine a first number of beam combinations based on the second information, the fourth information, and the fifth information.

The optional implementation of the step S3302 can refer to the optional implementation of the step S2304 in FIG. 2c and other related parts in the embodiment involved in FIG. 2c, which will not be repeated here.

**Step S3303:** Send sixth information.

The optional implementation of the step S3303 can refer to the optional implementations of the step S2305 in FIG. 2c and other related parts in the embodiment involved in FIG. 2c, which will not be described in detail here.

In some embodiments, the terminal 101 sends the sixth information to the network device 102, but may also send the sixth information to other entities.

**Step S3304:** Send seventh information.

The optional implementation of the step S3304 can refer to the optional implementations of the step S2306 in FIG. 2c and other related parts in the embodiment involved in FIG. 2c, which will not be described in detail here.

In some embodiments, the terminal 101 sends the seventh information to the network device 102, but may also send the seventh information to other entities.

In some embodiments, the execution order of the step S3304 and other steps is not limited, that is, the step S3304 can be executed before, after or simultaneously with any one of the step S3301, the step S3302, and the step S3303, and this disclosure does not limit it.

In the embodiments of the present disclosure, the step S3301 can be implemented as an independent embodiment, the step S3302 can be implemented as an independent embodiment, the step S3303 can be implemented as an independent embodiment, the step S3304 can be implemented as an independent embodiment, the step S3301+step S3302 can be implemented as an independent embodiment, the step S3301+step S3302+step S3303 can be implemented as an independent embodiment, and the step S3301+step S3302+step S3303+step S3304 can be implemented as independent embodiments, but are not limited to this.

In some embodiments, the step S3303 and the step the S3304 are optional, and one or more of these steps may be omitted or replaced in different embodiments.

In some embodiments, the step S3304 is optional, and one or more of these steps may be omitted or replaced in different embodiments.

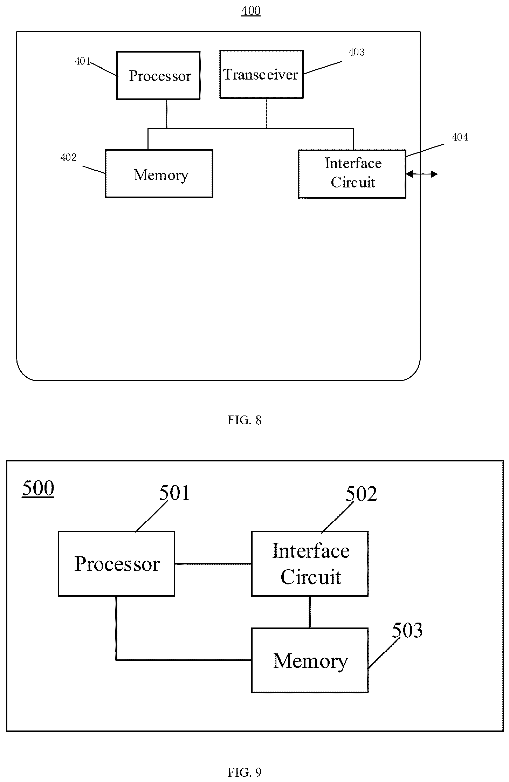

FIG. 3d is a flow chart of another method for determining a beam combination according to an exemplary embodiment. As shown in FIG. 8, the embodiment of the present disclosure relates to a method for determining a beam combination, which is executed by terminal 101 and includes:
**Step S3401:** Determine first information.

In some embodiments, the first information is used to indicate a first number of beam combinations, where the beam combination is a combination of one or more numbers-of-beams.

In some embodiments, determining the first information may include receiving the first information.

In an optional embodiment, the optional implementation of the step S3401 can refer to the step S2101 of FIG. 2a and other related parts of the embodiment involved in FIG. 2a. In an optional embodiment, the optional implementation of the step S3401 can refer to step the S3101 of FIG. 3a and other related parts of the embodiment involved in FIG. 3a, which will not be repeated here.

In some embodiments, determining the first information may include: receiving second information and third information, and determining the first information based on the second information and the third information.

In some embodiments, the second information is used to indicate a second number of beam combinations.

In some embodiments, the third information is used to indicate the first number of beam combinations in the second number of beam combinations.

In some embodiments, the second information is an RRC signaling, and the third information is a MAC CE.

In some embodiments, the third information includes a first field, the second number of beam combinations includes the first number of beam combinations corresponding to multiple codepoints in the first field in the third information, and the first field in the third information is used to indicate one codepoint among the multiple codepoints.

In some embodiments, the second information is the RRC signaling, and the third information is the DCI.

In an optional embodiment, the optional implementation of the step S3401 can be referred to the step S2201 of FIG. 2b, the step S2202 of FIG. 2b, and other related parts of the embodiment involved in FIG. 2b. In an optional embodiment, the optional implementation of the step S3401 can be referred to the step S3201 of FIG. 3b, and other related parts of the embodiment involved in FIG. 3b, which will not be repeated here.

In some embodiments, determining the first information may include: receiving second information, fourth information, and fifth information, and determining the first information based on the second information, the fourth information, and the fifth information.

In some embodiments, the fourth information is used to indicate the third number of beam combinations in the second number of beam combinations.

In some embodiments, the first field in the fifth information is used to indicate one codepoint among the plurality of codepoints.

In some embodiments, the third number of beam combinations includes the first number of beam combinations corresponding to the plurality of codepoints of the first filed.

In an optional embodiment, an optional implementation of the step S3401 may refer to the step S2301, the step S2302, the step S2303 of FIG. 2c, and other related parts of the embodiment involved in FIG. 2c. In an optional embodiment, an optional implementation of the step S3401 may refer to the step S3301 of FIG. 3c, and other related parts of the embodiment involved in FIG. 3c, which will not be described in detail here.

In some embodiments, the second information is an RRC signaling, the fourth information is a MAC CE, and the fifth information is DCI.

**Step S3402:** Determine the first number of beam combinations based on the first information.

In some embodiments, the number of each beam in the beam combination is respectively associated with a CSI-RS resource, for different numbers of CSI-RS resources, the maximum value of the first number is the same or different.

In some embodiments, the number of CSI-RS is 1, and the maximum value of the first number is 2 or 4.

In some embodiments, the number of CSI-RSs is greater than 1, and the maximum value of the first number is 4.

In some embodiments, the CSI-RS resource is greater than 1, and the number of beams in the beam combination is sequentially associated with the multiple CSI-RS resources based on a preset order.

In an optional embodiment, the optional implementation of the step S3402 can refer to the step S2102 of FIG. 2a and other related parts of the embodiment involved in FIG. 2a. In an optional embodiment, the optional implementation of the step S3402 can refer to the step S3102 of FIG. 3a and other related parts of the embodiment involved in FIG. 3a, which will not be repeated here.

In an optional embodiment, the optional implementation of the step S3402 can be referred to the step S2203 of FIG. 2b and other related parts of the embodiment involved in FIG. 2b. In an optional embodiment, the optional implementation of the step S3402 can be referred to the step S3202 of FIG. 3b and other related parts of the embodiment involved in FIG. 3b, which will not be repeated here.

In an optional embodiment, an optional implementation of the step S3402 may refer to the step S2304 in FIG. 2c and other related parts of the embodiment involved in FIG. 2c. In an optional embodiment, an optional implementation of the step S3402 may refer to the step S3302 in FIG. 3c and other related parts of the embodiment involved in FIG. 3c, which will not be described in detail here.

In some embodiments, the method may further include sending sixth information.

In some embodiments, the sixth information is used to indicate one or more beam combinations among the first number of beam combinations.

In some embodiments, the number of bits corresponding to one beam combination indicated by the sixth information is determined based on the first number or the maximum value of the first number.

In an optional embodiment, the optional implementation method of sending the sixth information can be found in the step S2103 of FIG. 2a and other related parts of the embodiment involved in FIG. 2a, which will not be repeated here.

In some embodiments, sending seventh information may also be included.

In some embodiments, the seventh information is used to indicate a maximum value of the first number supported by the terminal.

In some embodiments, the maximum value of the first number supported by the terminal includes: a maximum value of the first number supported by the terminal.

In some embodiments, the maximum value of the first number supported by the terminal includes: multiple maximum values of the first number supported by the terminal.

In an optional embodiment, an optional implementation method of sending the seventh information can be found in the step S2104 of FIG. 2a and other related parts of the embodiment involved in FIG. 2a, which will not be described in detail here.

In the embodiment of the present disclosure, the step S3401 can be implemented as an independent embodiment, the step S3402 can be implemented as an independent embodiment, and the step S3401+step S3402 can be implemented as independent embodiments, but are not limited thereto.

FIG. 4a is a flow chart of another method for determining a beam combination according to an embodiment of the present disclosure. As shown in FIG. 4a, the embodiment of the present disclosure relates to a method for determining a beam combination, which is executed by a network device 102 and includes:
**Step S4101:** Send first information.

The optional implementation of the step S4101 can refer to the optional implementation of the step S2101 in FIG. 2a and other related parts in the embodiment involved in FIG. 2a, which will not be repeated here.

In some embodiments, the network device 102 sends the first information to the terminal 101. The first information may indicate the first information, that is, the first information may indicate a first number of beam combinations.

For example, the first information configures the first number of beam combinations.

**Step S4102:** Obtain sixth information.

The optional implementation of the step S4102 can refer to the optional implementation of the step S2103 in FIG. 2a and other related parts in the embodiment involved in FIG. 2a, which will not be repeated here.

In some embodiments, the network device 102 receives the sixth information from the terminal 101, but may also receive the sixth information from other entities.

In some embodiments, the network device 102 obtains the sixth information specified by the protocol.

In some embodiments, the terminal 101 obtains the sixth information from an upper layer(s).

In some embodiments, the network device 102 performs processing to obtain the sixth information.

In some embodiments, the step S4102 is omitted, and the network device 102 autonomously determines the first information, that is, determines the first number of beam combinations, or the above function is preset or default.

**Step S4103:** Obtain seventh information.

The optional implementation of the step S4103 can refer to the optional implementation of the step S2104 in FIG. 2a and other related parts in the embodiment involved in FIG. 2a, which will not be repeated here.

In some embodiments, the network device 102 receives the seventh information from the terminal 101, but may also receive the seventh information from other entities.

In some embodiments, the network device 102 obtains the seventh information specified by the protocol.

In some embodiments, the terminal 101 obtains the seventh information from an upper layer(s).

In some embodiments, the network device 102 performs processing to obtain the seventh information.

In some embodiments, the step S4103 is omitted, and the network device 102 autonomously determines the first information, that is, determines the first number of beam combinations, or the above function is preset or default.

In some embodiments, the execution order of the step S4103 and other steps is not limited, that is, the step S4103 can be executed before, after or simultaneously with any one of the step S4101 and the step S4102, and this disclosure does not limit it.

In the embodiments of the present disclosure, the step S4101 can be implemented as an independent embodiment, the step S4102 can be implemented as an independent embodiment, the step S4103 can be implemented as an independent embodiment, the step S4101+step S4102 can be implemented as an independent embodiment, the step S4101+step S4103 can be implemented as an independent embodiment, and the step S4101+step S4102+step S4103 can be implemented as an independent embodiment, but are not limited to this.

In some embodiments, the step S4102 and the step S4103 are optional, and one or more of these steps may be omitted or replaced in different embodiments.

In some embodiments, the step S4103 is optional, and one or more of these steps may be omitted or replaced in different embodiments.

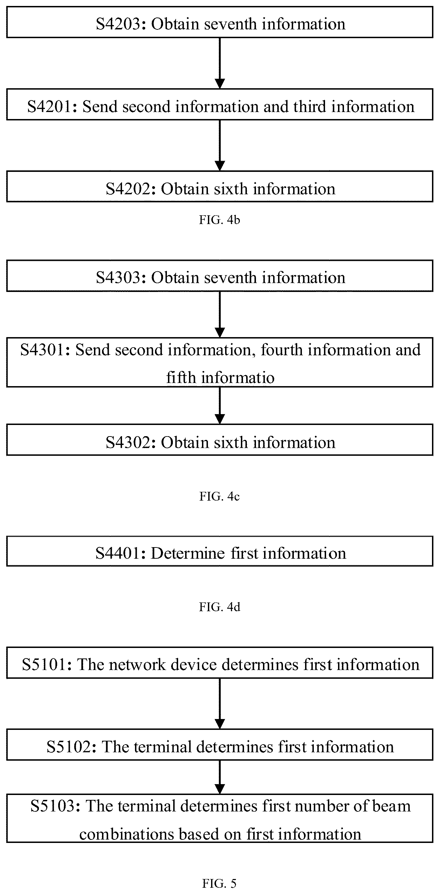

FIG. 4b is a flow chart of another method for determining a beam combination according to an embodiment of the present disclosure. As shown in FIG. 4b, the embodiment of the present disclosure relates to a method for determining a beam combination, which is executed by the network device 102 and includes:

**Step S4201:** Send second information and third information.

The optional implementation of the step S4201 can refer to the optional implementation of the step S2201 in FIG. 2b, the optional implementation of the step S2202 in FIG. 2b, and other related parts in the embodiment involved in FIG. 2b, which will not be repeated here.

In some embodiments, the second information configures a second number of beam combinations.

In some embodiments, the third information indicates the first number of beam combinations among the second number of beam combinations.

**Step S4202:** Obtain sixth information.

The optional implementations of the step S4202 can refer to the optional implementations of the step S2204 in FIG. 2b and other related parts of the embodiment involved in FIG. 2b. The optional implementations of the step S4202 can refer to the optional implementations of the step S4102 in FIG. 4a and other related parts of the embodiment involved in FIG. 4a, which will not be described in detail here.

**Step S4203:** Obtain seventh information.

The optional implementations of the step S4203 can refer to the optional implementations of the step S2205 in FIG. 2b and other related parts of the embodiment involved in FIG. 2b. The optional implementations of the step S4203 can refer to the optional implementations of the step S4103 in FIG. 4a and other related parts of the embodiment involved in FIG. These will not be described in detail here.

In some embodiments, the execution order of the step S4203 and other steps is not limited, that is, the step S4203 can be executed before, after or simultaneously with any one of the step S4201 and the step S4202, and this disclosure does not limit it.

In the embodiments of the present disclosure, the step S4201 can be implemented as an independent embodiment, the step S4202 can be implemented as an independent embodiment, the step S4203 can be implemented as an independent embodiment, the step S4201+step S4202 can be implemented as an independent embodiment, the step S4201+step S4203 can be implemented as an independent embodiment, and the step S4201+step S4202+step S4203 can be implemented as an independent embodiment, but are not limited to this.

In some embodiments, the step S4202 and the step S4203 are optional, and one or more of these steps may be omitted or replaced in different embodiments.

In some embodiments, the step S4203 is optional, and one or more of these steps may be omitted or replaced in different embodiments.

FIG. 4c is a flow chart of another method for determining a beam combination according to an embodiment of the present disclosure. As shown in FIG. 4c, the embodiment of the present disclosure relates to a method for determining a beam combination, which is executed by the network device 102 and includes:
**Step S4301:** Send second information, fourth information and fifth information.

The optional implementation of the step S4301 can be found in the optional implementation of the step S2301 in FIG. 2c, the optional implementation of the step S2302 in FIG. 2c, the optional implementation of the step S2303 in FIG. 2c, and other related parts in the embodiment involved in FIG. 2c, which will not be repeated here.

In some embodiments, the second information configures the second number of beam combinations

In some embodiments, the fourth information indicates the third number of beam combinations.

In some embodiments, the fifth information indicates the first number of beam combinations among the third number of beam combinations.

**Step S4302:** Obtain sixth information.

The optional implementations of the step S4302 can refer to the optional implementations of the step S2305 in FIG. 2c and other related parts of the embodiment involved in FIG. 2b. The optional implementations of the step S4302 can refer to the optional implementations of the step S4102 in FIG. 4a and other related parts of the embodiment involved in FIG. 4a, which will not be repeated here.

**Step S4303:** Obtain seventh information.

The optional implementations of the step S4303 can refer to the optional implementation of the step S2306 in FIG. 2c and other related parts of the embodiment involved in FIG. 2c. The optional implementations of the step S4303 can refer to the optional implementation of the step S4103 in FIG. 4a and other related parts of the embodiment involved in FIG. 4a, which will not be repeated here.

In some embodiments, the execution order of the step S4303 and other steps is not limited, that is, the step S4303 can be executed before, after or simultaneously with any one of the step S4301 and the step S4302, and this disclosure does not limit it.

In the embodiments of the present disclosure, the step S4301 can be implemented as an independent embodiment, the step S4302 can be implemented as an independent embodiment, the step S4303 can be implemented as an independent embodiment, the step S4301+step S4302 can be implemented as an independent embodiment, the step S4301+step S4303 can be implemented as an independent embodiment, and the step S4301+step S4302+step S4303 can be implemented as an independent embodiment, but are not limited to this.

In some embodiments, the step S4302 and the step S4303 are optional, and one or more of these steps may be omitted or replaced in different embodiments.

In some embodiments, the step S4303 is optional, and one or more of these steps may be omitted or replaced in different embodiments.

FIG. 4d is a flow chart of another method for determining a beam combination according to an exemplary embodiment. As shown in FIG. 4d, the embodiment of the present disclosure relates to a method for determining a beam combination, which is executed by the network device 102 and includes:
**Step S4401:** Determine first information.

In some embodiments, the first information is used to indicate the first number of beam combinations, where the beam combination is a combination of one or more numbers-of-beams.

In some embodiments, determining the first information may include: determining the first information; and sending the first information.

In an optional embodiment, the optional implementation of the step S4401 can be referred to the step S2101 of FIG. 2a and other related parts of the embodiment involved in FIG. 2a. In an optional embodiment, the optional implementation of the step S4401 can be referred to the step S4101 of FIG. 4a and other related parts of the embodiment involved in FIG. 4a, which will not be repeated here.

In some embodiments, determining the first information may include: determining the second information and the third information; and sending the second information; and sending the third information.

In some embodiments, the second information is used to indicate the second number of beam combinations.

In some embodiments, the third information is used to indicate the first number of beam combinations in the second number of beam combinations.

In some embodiments, the second information is an RRC signaling, and the third information is a MAC CE.

In some embodiments, the third information includes a first field, the second number of beam combinations includes the first number of beam combinations corresponding to multiple codepoints in the first field in the third information, and the first field in the third information is used to indicate one codepoint among the multiple codepoints.

In some embodiments, the second information is an RRC signaling, and the third information is DCI.

In an optional embodiment, the optional implementation of the step S4401 can be referred to the step S2201 of FIG. 2b, the step S2202 of FIG. 2b, and other related parts of the embodiment involved in FIG. 2b. In an optional embodiment, the optional implementation of the step S4401 can be referred to the step S4201 of FIG. 4b, and other related parts of the embodiment involved in FIG. 4b, which will not be described in detail here.

In some embodiments, determining the first information may include: determining second information, fourth information, and fifth information; and sending the second information; sending the fourth information; and sending the fifth information.

In some embodiments, the fourth information is used to indicate a third number of beam combinations in the second number of beam combinations.

In some embodiments, the first field in the fifth information is used to indicate one codepoint among a plurality of codepoints.

In some embodiments, the third number of beam combinations includes the first number of beam combinations corresponding to the plurality of codepoints of the first filed.

In some embodiments, the second information is an RRC signaling, the fourth information is a MAC CE, and the fifth information is DCI.

In an optional embodiment, the optional implementation of the step S4401 can be found in the step S2301, the step S2302, and the step S2303 of FIG. 2c, as well as other related parts of the embodiment involved in FIG. 2c. In an optional embodiment, the optional implementation of the step S4401 can be found in the step S4301 of FIG. 4c, as well as other related parts of the embodiment involved in FIG. 4c, which will not be described in detail here.

In some embodiments, the respective number-of-beam in the beam combination is respectively associated with a CSI-RS resource, and for different numbers of CSI-RS resources, the maximum value of the first number is the same or different.

In some embodiments, the number of CSI-RS is 1, and the maximum value of the first number is 2 or 4.

In some embodiments, the number of CSI-RSs is greater than 1, and the maximum value of the first number is 4.

In some embodiments, the CSI-RS resource is greater than 1, and the number of beams in the beam combination is sequentially associated with the multiple CSI-RS resources based on a preset order.

In some embodiments, the method may further include obtaining sixth information.

In some embodiments, the sixth information is used to indicate one or more beam combinations among the first number of beam combinations.

In some embodiments, the number of bits corresponding to one beam combination indicated by the sixth information is determined based on the first number or the maximum value of the first number.

In an optional embodiment, an optional implementation method of sending the sixth information can be found in the step S2103 of FIG. 2a and other related parts of the embodiment involved in FIG. 2a, which will not be repeated here.

In some embodiments, the method may further include obtaining seventh information.

In some embodiments, the seventh information is used to indicate a maximum value of the first number supported by the terminal.

In some embodiments, the maximum value of the first number supported by the terminal includes: one maximum value of the first number supported by the terminal.

In some embodiments, the maximum value of the first number supported by the terminal includes: multiple maximum values of the first number supported by the terminal.

In an optional embodiment, an optional implementation method of sending the seventh information can be found in the step S2104 of FIG. 2a and other related parts of the embodiment involved in FIG. 2a, which will not be described in detail here.

FIG. 5 is a flow chart illustrating another method for determining beam combination according to an embodiment of the present disclosure. As shown in FIG. 5, an embodiment of the present disclosure relates to a method for determining beam combination, which is used in a communication system 100. The method includes:

**Step S5101:** The network device determines first information.

The optional implementation of the step S5101 can be found in the optional implementation of the step S4401 of FIG. 4d, and other related parts in the embodiment involved in FIG. 4d. The optional implementation of the step S5101 can be found in the optional implementation of the step S2101 of FIG. 2a, and other related parts in the embodiment involved in FIG. 2a. The optional implementation of the step S5101 can also be found in the optional implementation of the step S2201 of FIG. 2b, the optional implementation of the step S2202 of FIG. 2b, and other related parts in the embodiment involved in FIG. 2b. The optional implementation of the step S5101 can also be found in the optional implementation of the step S2301 of FIG. 2c, the optional implementation of the step S2302 of FIG. 2c, the optional implementation of the step S2303 of FIG. 2c, and other related parts in the embodiment involved in FIG. 2c, which will not be repeated here.

**Step S5102:** The terminal determines the first information.

The optional implementation of the step S5102 can be found in the optional implementation of the step S3401 of FIG. 3d, and other related parts in the embodiment involved in FIG. 3d. The optional implementation of the step S5102 can be found in the optional implementation of the step S2101 of FIG. 2a, and other related parts in the embodiment involved in FIG. 2a. The optional implementation of the step S5102 can also be found in the optional implementation of the step S2201 of FIG. 2b, the optional implementation of the step S2202 of FIG. 2b, and other related parts in the embodiment involved in FIG. 2b. The optional implementation of the step S5102 can also be found in the optional implementation of the step S2301 of FIG. 2c, the optional implementation of the step S2302 of FIG. 2c, the optional implementation of the step S2303 of FIG. 2c, and other related parts in the embodiment involved in FIG. 2c, which will not be repeated here.

**Step S5103:** The terminal determines the first number of beam combinations based on the first information.

The optional implementation of the step S5103 can refer to the optional implementation of the step S3402 in FIG. 3d, and other related parts in the embodiment involved in FIG. 3d. The optional implementation of the step S5103 can refer to the optional implementation of the step S2102 in FIG. 2a, and other related parts in the embodiment involved in FIG. 2a. The optional implementation of the step S5103 can refer to the optional implementation of the step S2203 in FIG. 2b, and other related parts in the embodiment involved in FIG. 2b. The optional implementation of the step S5103 can refer to the optional implementation of the step S2304 in FIG. 2c, and other related parts in the embodiment involved in FIG. 2c, which will not be repeated here.

In some embodiments, the above method may include the method described in the above embodiments related to the communication system 100, the terminal 101, the network device 102, etc., which will not be repeated here.

In one embodiment, in the present disclosure, the above implementations are described based on more specific examples.

In some embodiments, a terminal 101 receives indication information from a network device 102. The terminal 101 determines a first number of SD basis number combinations based on the indication information. When the first number is greater than 1, the terminal 101 indicates at least one SD basis number combination. The first number of SD basis number combinations includes at least one SD basis number combination.

In some embodiments, the indication information includes an RRC, that is, the RRC configures at most one, two, or four SD basis number combinations. The terminal 101 determines all the combinations configured by RRC as the first number of SD basis number combinations.

In some embodiments, the indication information includes an RRC and a MAC CE, i.e., the RRC may configure more than one, two, or four SD basis number combinations, and the MAC CE then activates one, two, or four SD basis number combinations among the multiple SD basis number combinations configured by the RRC. The terminal determines the one, two, or four SD basis number combinations activated by the MAC CE as the first number of SD basis number combinations.

In some embodiments, the indication information includes an RRC and DCI. A codepoint of DCI corresponds to one or more SD basis number combinations, and the corresponding relationship is configured by the RRC. That is, the DCI indicates a codepoint, which means indicating one, two, or four SD basis number combinations corresponding to the codepoint. The codepoint of the DCI can be determined based on the number of SD basis number combinations configured by the RRC to determine whether it exists in the DCI.

In some embodiments, the indication information includes an RRC, a MAC CE, and a DCI. That is, the RRC may configure a second number of SD basis number combinations, such as more than one, two, or four SD basis number combinations. The MAC CE then activates a third number of SD basis number combinations, such as more than one, two, or four SD basis number combinations, among the second number of SD basis number combinations configured by the RRC. The DCI indicates one, two, or four SD basis number combinations in the MAC CE. The terminal determines the one, two, or four SD basis number combinations indicated by the DCI as the first number of SD basis number combinations.

A codepoint of the DCI corresponds to one or more SD basis number combinations, and the corresponding relationship is configured by the RRC and/or the MAC CE. That is, the DCI indicates a codepoint, indicating the one, two, or four SD basis number combinations corresponding to the codepoint. The codepoint of the DCI can be determined based on the number of SD basis number combinations configured by RRC to determine whether it exists in the DCI.

In some embodiments, the maximum value of the first number is different for different numbers of TRPs. For example, when the number of TRPs is 1, the maximum value of the first number is 2 or 4; when the number of TRPs is greater than 1, the maximum value of the first number is 4.

In some embodiments, for different numbers of CSI-RS resources, the maximum value of the first number is different. For example, when the CSI-RS resource is 1, the maximum value of the first number is 2 or 4; and when the CSI-RS resource is greater than 1, the maximum value of the first number is 4.

In some embodiments, the terminal 101 determines the number of bits in the UCI used to indicate at least one SD basis number combination based on the first number or the maximum value of the first number.

For example, if the first number or the maximum value of the first number is 4, 2 bits are required; if the first number or the maximum value of the first number is 2, 1 bit is required.

In one embodiment, the UCI is UCI corresponding to the report CSI. It may include at least one of the **PMI, RI,** CQI, and **LI.** Of course, the UCI may also include any other possible parameters, which are not limited in this disclosure.

In some embodiments, the correspondence between the number of SD basis in the SD basis number combination, such as {2,2,2,4}, and the four CSI-RS resources in the CMR, is mapping the {2,2,2,4} to the CSI-RS resource index in descending order, that is, the "4" corresponds to the smallest CSI-RS index.

In some embodiments, the correspondence between the number of SD basis in the SD basis number combination, such as {2,2,2,4}, and the four CSI-RS resources in the CMR, is mapping the {2,2,2,4} to the CSI-RS resource index in ascending order, that is, the "4" corresponds to the largest CSI-RS index.

In some embodiments, the terminal may report the maximum value of the first number of beam combinations supported by the terminal. For example, the terminal reports one maximum value of the first number of beam combinations supported by the terminal. For another example, the terminal reports multiple maximum values of the first number of beam combinations supported by the terminal.

In the embodiments of the present disclosure, each step can be implemented as an independent embodiment. Part or all of the steps and their optional implementations can be arbitrarily combined with part or all of the steps in other embodiments, or with the optional implementations of other embodiments.

In some embodiments, the steps of sending UCI and sending the maximum value indicating that the terminal supports the first number of beam combinations are optional, and one or more of these steps may be omitted or replaced in different embodiments.

The embodiments of the present disclosure also provide an apparatus for implementing any of the above methods. For example, a beam combination determination apparatus is provided, comprising units or modules for implementing each step performed by a terminal in any of the above methods. For another example, another beam combination determination apparatus is provided, comprising units or modules for implementing each step performed by a network device (e.g., an access network device, a core network function node, a core network device, etc.) in any of the above methods.

It should be understood that the division of the various units or modules in the above-mentioned apparatus is merely a division of logical functions. In actual implementation, they may be fully or partially integrated into a single physical entity, or they may be physically separated. Furthermore, the units or modules in the apparatus may be implemented in the form of a processor invoking software: for example, the apparatus includes a processor connected to a memory storing instructions, and the processor invokes the instructions stored in the memory to implement any of the above-mentioned methods or the functions of the various units or modules in the above-mentioned apparatus. The processor may be, for example, a general-purpose processor, such as a central processing unit (CPU) or a microprocessor, and the memory may be internal to the apparatus or external to the apparatus. Alternatively, the units or modules in the apparatus may be implemented in the form of hardware circuits, and the functions of some or all of the units or modules may be realized by designing the hardware circuits. The hardware circuits may be understood as one or more processors. For example, in one implementation, the hardware circuits may be an application-specific integrated circuit (ASIC), and the functions of some or all of the units or modules may be realized by designing the logical relationships between the components within the circuits. In another implementation, the hardware circuits may be implemented by programmable logic devices (PLDs), such as field programmable gate arrays (FPGAs), which may include a large number of logic gate circuits. The connections between the logic gate circuits may be configured through configuration files, thereby realizing the functions of some or all of the units or modules. All units or modules of the above devices may be implemented entirely by a processor calling software, entirely by hardware circuits, or partially by a processor calling software, with the remainder implemented by hardware circuits.

In the embodiments of the present disclosure, a processor is a circuit with signal processing capabilities. In one implementation, the processor can be a circuit with capabilities of reading and executing instructions, such as a CPU, a microprocessor, a graphics processing unit (GPU) (which can be understood as a microprocessor), or a digital signal processor (DSP). In another implementation, the processor can implement certain functions through the logical relationships of hardware circuits, where the logical relationships of the hardware circuits are fixed or reconfigurable. For example, the processor is a hardware circuit implemented as an ASIC or PLD, such as an FPGA. In a reconfigurable hardware circuit, the process of the processor loading a configuration file and implementing hardware circuit configuration can be understood as the process of the processor loading instructions to implement the functions of some or all of the above units or modules. Furthermore, the processor can also be a hardware circuit designed for artificial intelligence, which can be understood as an ASIC, such as a neural network processing unit (NPU), a tensor processing unit (TPU), a deep learning processing unit (DPU), etc.

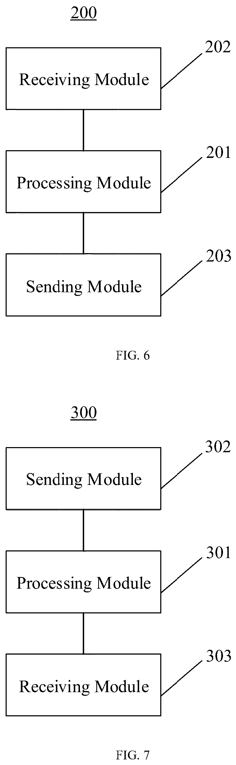

FIG. 6 is a schematic diagram of a beam combination determination apparatus according to an exemplary embodiment. As shown in FIG. 6, the first beam combination determination apparatus 200 includes: a processing module 201, configured to determine first information, the first information being configured to indicate a first number of beam combinations, where the beam combination is a combination of one or more numbers-of-beams. The processing module 201 is further configured to determine the first number of beam combinations based on the first information. Optionally, the processing module 201 is configured to execute the determination-related steps executed by the terminal 101 in any of the above methods, which are not described in detail here. Optionally, the first beam combination determination apparatus 200 further includes at least one of a receiving module 202 and a sending module 203, where the receiving module 202 is configured to execute the reception-related steps executed by the terminal 101 in any of the above methods, and the sending module 203 is configured to execute the sending-related steps executed by the terminal 101 in any of the above methods, which are not described in detail here.

FIG. 7 is a schematic diagram of another beam combination determination apparatus according to an exemplary embodiment. As shown in FIG. 7, the second beam combination determination apparatus 300 includes: a processing module 301 for determining first information, the first information being used to indicate a first number of beam combinations, where a beam combination is a combination of one or more numbers-of-beams. Optionally, the processing module 301 is used to execute the steps related to determination performed by the network device 102 in any of the above methods, which are not described in detail here. Optionally, the second beam combination determination apparatus 300 further includes at least one of a sending module 302 and a receiving module 303, where the sending module 302 is used to execute the steps related to sending performed by the network device 102 in any of the above methods, and the receiving module 303 is used to execute the steps related to sending performed by the network device 102 in any of the above methods, which are not described in detail here.

FIG. 8 is a schematic diagram of a communication device according to an exemplary embodiment. The communication device 400 can be a network device (e.g., an access network device, a core network device, etc.), a terminal (e.g., a user equipment, etc.), or a chip, chip system, or processor that supports a network device implementing any of the above methods. It can also be a chip, chip system, or processor that supports a terminal implementing any of the above methods. The communication device 400 can be used to implement the methods described in the above method embodiments. For details, please refer to the description of the above method embodiments.

As shown in FIG. 8, the communication device 400 includes one or more processors 401. The processor 401 can be a general-purpose processor or a dedicated processor, such as a baseband processor or a central processing unit (CPU). A baseband processor can be used to process communication protocols and communication data, while a CPU can be used to control communication devices (e.g., base stations, baseband chips, terminal devices, terminal device chips, DUs or CUs), execute programs, and process program data. The processor 401 is used to invoke instructions to cause communication device 400 to execute any of the above methods.

In some embodiments, the communication device 400 further includes one or more memories 402 for storing instructions. Alternatively, all or part of the memories 402 may be located outside the communication device 400.

In some embodiments, the communication device 400 further includes one or more transceivers 403. When the communication device 400 includes one or more transceivers 403, the communication steps such as sending and receiving in the above method are performed by the transceiver 403, and the other steps are performed by the processor 401.

In some embodiments, a transceiver may include a receiver and a transmitter, which may be separate or integrated. Alternatively, the terms transceiver, transceiver unit, transceiver device, and transceiver circuit may be used interchangeably; the terms transmitter, transmitting unit, transmitter device, and transmitting circuit may be used interchangeably; and the terms receiver, receiving unit, receiver device, and receiving circuit may be used interchangeably.

Optionally, the communication device 400 further includes one or more interface circuits 404, which are connected to the memory 402. The interface circuits 404 can be used to receive signals from the memory 402 or other devices, and can be used to send signals to the memory 402 or other devices. For example, the interface circuits 404 can read instructions stored in the memory 402 and send the instructions to the processor 401.

The communication device 400 described in the above embodiment may be a network device or a terminal, but the scope of the communication device 400 described in the present disclosure is not limited thereto, and the structure of the communication device 400 may not be limited by FIG. 8. The communication device may be an independent device or may be part of a larger device. For example, the communication device may be: 1) an independent integrated circuit IC, or a chip, or a chip system or subsystem; (2) a collection of one or more ICs, optionally, the above IC collection may also include a storage component for storing data and programs; (3) an ASIC, such as a modem; (4) a module that can be embedded in other devices; (5) a receiver, a terminal device, an intelligent terminal device, a cellular phone, a wireless device, a handheld device, a mobile unit, an in-vehicle device, a network device, a cloud device, an artificial intelligence device, etc.; and (6) others, etc.

FIG. 9 is a schematic diagram of a chip structure according to an exemplary embodiment. In the case where the communication device 400 can be a chip or a chip system, reference can be made to the schematic diagram of the chip 500 shown in FIG. 9, but the present invention is not limited thereto.

The chip 500 includes one or more processors 501, and the processor 501 is used to call instructions so that the chip 500 executes any of the above methods.

In some embodiments, the chip 500 further includes one or more interface circuits 502, which are connected to a memory 503. The interface circuit 502 can be used to receive signals from the memory 503 or other devices, and can be used to send signals to the memory 503 or other devices. For example, the interface circuit 502 can read instructions stored in the memory 503 and send the instructions to the processor 501. Optionally, the terms interface circuit, interface, transceiver lead, and transceiver can be used interchangeably.

In some embodiments, the chip 500 further includes one or more memories 503 for storing instructions. Optionally, all or part of the memories 503 may be located outside the chip 500.

The present disclosure also provides a storage medium having instructions stored thereon. When the instructions are executed on a communication device 500, the communication device 500 executes any of the above methods. Optionally, the storage medium is an electronic storage medium. Optionally, the storage medium is a computer-readable storage medium, but may also be a storage medium readable by other devices. Optionally, the storage medium may be a non-transitory storage medium, but may also be a transient storage medium.

The present disclosure also provides a program product, which, when executed by the communication device 500, enables the communication device 500 to perform any of the above methods. Optionally, the program product is a computer program product.

The present disclosure also provides a computer program, which, when executed on a computer, enables the computer to execute any one of the above methods.

In the present disclosure, by indicating a first number of beam combinations through the network device, it allows improving the transmission performance based on multi-TRP while reducing the signaling overhead of downlink configuration and CSI reporting, when the terminal is served by multi-TRP or multiple remote radio heads (RRH).

## Claims

1. A beam combining determination method, performed by a terminal, comprising:
determining first information, wherein the first information is used to indicate a first number of beam combinations, wherein the beam combination is a combination of one or more numbers-of-beams; and
determining the first number of beam combinations based on the first information.

2. The method according to claim 1, wherein determining the first information comprises:
receiving a radio resource control (RRC) signaling, wherein the RRC signaling comprises the first information.

3. The method according to claim 1, wherein determining the first information comprises:
receiving second information, wherein the second information is used to indicate a second number of beam combinations;
receiving third information, wherein the third information is used to indicate the first number of beam combinations in the second number of beam combinations; and
determining the first information based on the second information and the third information.

4. The method according to claim 3, wherein the second information is an RRC signaling, and the third information is a media access control control unit (MAC CE).

5. The method according to claim 3, wherein the third information comprises a first field, the second number of beam combinations comprises the first number of beam combinations corresponding respectively to multiple codepoints in the first field in the third information, and the first field in the third information is used to indicate one codepoint among the multiple codepoints.

6. The method according to claim 5, wherein the second information is an RRC signaling, and the third information is downlink control information (DCI).

7. The method according to claim 1, wherein determining the first information comprises:
receiving second information, wherein the second information is used to indicate a second number of beam combinations;
receiving fourth information, wherein the fourth information is used to indicate a third number of beam combinations in the second number of beam combinations;
receiving fifth information, wherein a first field in the fifth information is used to indicate one of a plurality of codepoints; and
determining the first information based on the second information, the fourth information, and the fifth information;
wherein the third number of beam combinations comprises the first number of beam combinations corresponding respectively to multiple codepoints of the first filed.

8. The method according to claim 7, wherein the second information is an RRC signaling, the fourth information is a MAC CE, and the fifth information is DCI.

9. The method according to any one of claims 1 to 8, wherein each number-of-beam in the beam combination is respectively associated with a channel state information reference signal (CSI-RS) resource, and wherein for different numbers of the CSI-RS resources, a maximum value of the first number is the same or different.

10. The method according to claim 9, wherein the number of the CSI-RS is 1, and the maximum value of the first number is 2 or 4.

11. The method according to claim 9, wherein the number of the CSI-RSs is greater than 1, and a maximum value of the first number is 4.

12. The method according to any one of claims 1 to 11, further comprising:
sending sixth information, wherein the sixth information is used to indicate one or more beam combinations among the first number of beam combinations.

13. The method according to claim 12, wherein a number of bits corresponding to a beam combination indicated by the sixth information is determined based on the first number or a maximum value of the first number.

14. The method according to any one of claims 1 to 13, wherein a CSI-RS resource is greater than 1, and multiple numbers-of-beams in the beam combination are associated with multiple CSI-RS resources in sequence based on a preset order.

15. The method according to claim 1, further comprising:
sending seventh information, wherein the seventh information is used to indicate a maximum value of the first number supported by the terminal.

16. The method according to claim 15, wherein the maximum value of the first number supported by the terminal comprises: one or more maximum values of the first number supported by the terminal.

17. A beam combining determination method, performed by a network device, comprising:
determining first information, wherein the first information is used to indicate a first number of beam combinations, wherein the beam combination is a combination of one or more numbers-of-beams.

18. The method according to claim 17, further comprising:
sending a radio resource control (RRC) signaling, wherein the RRC signaling comprises the first information.

19. The method according to claim 17, further comprising:
sending second information, wherein the second information is used to indicate a second number of beam combinations; and
sending third information, wherein the third information is used to indicate the first number of beam combinations in the second number of beam combinations, and the first information is determined based on the second information and the third information.

20. The method according to claim 19, wherein the second information is an RRC signaling, and the third information is a media access control control element (MAC CE).

21. The method according to claim 19, wherein the third information comprises a first field, the second number of beam combinations comprises the first number of beam combinations corresponding respectively to multiple codepoints in the first field in the third information, and the first field in the third information is used to indicate one codepoint among the multiple codepoints.

22. The method according to claim 21, wherein the second information is an RRC signaling, and the third information is downlink control information (DCI).

23. The method according to claim 15, further comprising:
sending second information, wherein the second information is used to indicate a second number of beam combinations;
sending fourth information, wherein the fourth information is used to indicate a third number of beam combinations in the second number of beam combinations; and
sending fifth information, wherein a first field in the fifth information is used to indicate one of a plurality of codepoints, wherein the third number of beam combinations comprises the first number of beam combinations corresponding respectively to multiple codepoints of the first filed, and the first information is determined based on the second information, the fourth information, and the fifth information.

24. The method according to claim 23, wherein the second information is an RRC signaling, the fourth information is a MAC CE, and the fifth information is DCI.

25. The method according to any one of claims 17 to 24, wherein each number-of-beam in the beam combination is respectively associated with a channel state information reference signal (CSI-RS) resource, and wherein for different numbers of the CSI-RS resources, a maximum value of the first number is the same or different.

26. The method according to claim 25, wherein the number of the CSI-RS is 1, and the maximum value of the first number is 2 or 4.

27. The method according to claim 25, wherein the number of the CSI-RSs is greater than 1, and a maximum value of the first number is 4.

28. The method according to any one of claims 17 to 27, further comprising:
receiving sixth information, wherein the sixth information is used to indicate one or more beam combinations among the first number of beam combinations.

29. The method according to claim 28, wherein a number of bits corresponding to a beam combination indicated by the sixth information is determined based on the first number or a maximum value of the first number.

30. The method according to any one of claims 17 to 29, wherein a CSI-RS resource is greater than 1, and multiple numbers-of-beams in the beam combination are associated with multiple CSI-RS resources in sequence based on a preset order.

31. The method according to claim 17, further comprising:
receiving seventh information, wherein the seventh information is used to indicate a maximum value of the first number supported by a terminal.

32. The method according to claim 31, wherein the maximum value of the first number supported by the terminal comprises: one or more maximum values of the first number supported by the terminal.

33. A first beam combination determination apparatus, comprising:
a processing module, configured to determine first information, wherein the first information is used to indicate a first number of beam combinations, wherein the beam combination is a combination of one or more numbers-of-beams; and
the processing module is further configured to determine the first number of beam combinations based on the first information.

34. A second beam combination determination apparatus, comprising:
a processing module, configured to determine first information, wherein the first information is used to indicate a first number of beam combinations, wherein the beam combination is a combination of one or more numbers-of-beams.

35. A communication device comprising:
one or more processors;
wherein the processor is configured to call instructions to enable the communication device to execute the beam combination determination method according to any one of claims 1 to 16 or 17 to 32.

36. A communication system, comprising a terminal and a network device, wherein the terminal is configured to implement the beam combining determination method according to any one of claims 1 to 16, and the network device is configured to implement the beam combining determination method according to any one of claims 17 to 32.

37. A storage medium storing instructions, wherein when the instructions are executed on a communication device, the communication device is enabled to execute the beam combining determination method according to any one of claims 1 to 16 or 17 to 32.
